# EUROPEAN PATENT SPECIFICATION

(11) **EP 4 564 225 B1**
(45) Date of publication and mention of the grant of the patent: **25.03.2026**
(21) Application number: 24215389.8
(22) Date of filing: 26.11.2024
(51) Int. Cl.: G06N 3/045

(54) **METHOD AND APPARATUS FOR MANAGING AI/ML MODEL OR AI/ML FUNCTIONALITY IN WIRELESS COMMUNICATION SYSTEM**
VERFAHREN UND VORRICHTUNG ZUR VERWALTUNG EINES KI/ML-MODELLS ODER EINER KI/ML-FUNKTIONALITÄT IN EINEM DRAHTLOSKOMMUNIKATIONSSYSTEM
PROCÉDÉ ET APPAREIL DE GESTION DE MODÈLE AI/ML OU DE FONCTIONNALITÉ AI/ML DANS UN SYSTÈME DE COMMUNICATION SANS FIL

(30) Priority: 28.11.2023 KR 20230168585; 28.05.2024 KR 20240069520
(43) Date of publication of application: 04.06.2025
(73) Proprietor: Samsung Electronics Co., Ltd., Suwon-si, Gyeonggi-do 16677 (KR)
(72) Inventor: KWON, Yangsoo, Suwon-si 16677 (KR)
(74) Representative: Marks & Clerk LLP

(56) References cited:
- US-A1- 2023 362 625
- JUHA KORHONEN ET AL: "Summary report of [AT123][001][AIML] UE capability and applicability conditions (Apple)", vol. RAN WG2, no. Toulouse, FR; 20230821 - 20230825, 30 August 2023 (2023-08-30), XP052500539, Retrieved from the Internet <URL:https://www.3gpp.org/ftp/TSG_RAN/WG2_RL2/TSGR2_123/Docs/R2-2309202.zip R2-2309202 - Summary report of UE capability and applicability conditions-final.doc> [retrieved on 20230830]
- JUNGHOON LEE ET AL: "Discussion on general aspects of AI/ML framework for NR air interface", vol. RAN WG1, no. Incheon, KR; 20230522 - 20230526, 15 May 2023 (2023-05-15), XP052311216, Retrieved from the Internet <URL:https://www.3gpp.org/ftp/TSG_RAN/WG1_RL1/TSGR1_113/Docs/R1-2305788.zip R1-2305788 Discussion on general aspects of AI_ML framework for NR air interface_final.docx> [retrieved on 20230515]

## Description

### BACKGROUND

Apparatuses and methods consistent with example embodiments relate to a wireless communication system, and more particularly to, managing artificial intelligence (Al)/machine learning (ML) models or AI/ML functionality based on signaling between apparatuses in a wireless communication system.

Fifth-generation (5G) wireless communication technology defines a wide frequency band to enable fast transmission speeds and new services, and may be implemented not only in the frequency band below 6GHz ('Sub 6GHz'), such as 3.5 GHz, but also in the ultra-high frequency band ('Above 6GHz') called millimeter wave (mmWave), such as 28 GHz and 39GHz. In addition, sixth-generation (6G) wireless communication technology, which is called the system after 5G communication (Beyond 5G), is being considered for implementation in the terahertz band (e.g., band from 95 GHz to 3 THz) to achieve a transmission speed that is 50 times faster than 5G wireless communication technology and an ultra-low delay time that is reduced to 1/10.

In the early days of 5G wireless communication technology, with the goal of satisfying service support and performance requirements for enhanced Mobile BroadBand (eMBB), Ultra-Reliable Low-Latency Communications (URLLC), and massive Machine-Type Communications (mMTC), standardization has been carried out for beamforming and massive array multiple input/output (Massive MIMO) to alleviate path loss of radio waves in the ultra-high frequency band and increase the transmission distance of radio waves, various numerology support (multiple subcarrier interval operation, etc.) and dynamic operation of slot format for efficient use of ultra-high frequency resources, initial access technology to support multi-beam transmission and broadband, definition and operation of Band-Width Part (BWP), new channel coding methods such as Low Density Parity Check (LDPC) code for large data transmission and polar code for highly reliable transmission of control information, L2 pre-processing, network slicing providing a dedicated network specialized for specific services, and the like.

Currently, discussions are underway to improve and enhance the initial 5G wireless communication technology considering the services that 5G wireless communication technology was intended to support, and physical layer standardization is in progress for technologies, such as Vehicle-to-Everything (V2X) to help an autonomous vehicle make driving decisions and increase user convenience based on its own location and status information transmitted by the vehicle, New Radio Unlicensed (NR-U), which aims to operate a system that meets various regulatory requirements in unlicensed bands, NR terminal low power consumption technology (user equipment (UE) Power Saving), Non-Terrestrial Network (NTN), which is direct terminal-satellite communication to secure coverage in areas where communication with the terrestrial network is impossible, and location determination (positioning).

When this 5G wireless communication system becomes commercially available, the number of connected devices is expected to grow exponentially. Accordingly, it may be necessary to enhance the functions and performance of the 5G wireless communication system and integrated operation of connected devices. To this end, new research based on eXtended Reality (XR), Artificial Intelligence (AI)/ Machine Learning (ML) will be conducted on 5G performance improvement and complexity reduction, AI/ML service support, metaverse service support, drone communication, and the like, to efficiently support Augmented Reality (AR), Virtual Reality (VR), Mixed Reality (MR).

The development of the 5G wireless communication systems may be the basis for the development of AI/ML-based communication technology that realizes system optimization by utilizing AI/ML from the design stage and internalizing end-to-end AI/ML support functions.

In particular, in 3GPP Release 18, various study items were conducted to introduce and apply AI/ML-based communication technology to 5G NR wireless communication systems. For example, there are plans to apply AI/ML-based communication technology to three representative cases (e.g., channel state information (CSI) reporting, beam management, and positioning). Prior to applying AI/ML-based communication technology to the three cases described above, 3GPP constructed a basic framework for AI/ML, which represents the entire procedure of life cycle management (LCM) of AI/ML.

With the development of wireless communication systems as described above, various AI/ML-based services may be provided, and thus, a method of effectively providing the services is required. In addition, in a wireless communication system, a method of efficiently managing AI/ML models or AI/ML functionality based on signaling between terminal devices and base station devices is required.

US 2023/0362625 A1 describes how a user equipment (UE) may transmit an update to a previously reported set of UE artificial intelligence (AI) or machine learning (ML) capabilities. The UE may receive a configuration associated with performance of UE AI or ML operations based at least in part on the update.

JUHA KORHONEN ET AL: "Summary report of [AT123][001][AIML] UE capability and applicability conditions (APPLE) (https://www.3gpp.org/ftp/TSG_RAN/WG2_RL2/TSGR2_123/Docs/R2-2309202.zip) describes comments on the topic of applicability conditions and UE capability, in particular such reporting that needs to be more dynamic than current static UE capabilities.

JUNGHOON LEE ET AL: "Discussion on general aspects of AI/ML framework for NR air interface" (https://www.3gpp.org/ftp/TSG_RAN/WG1_RL1/TSGR1_113/Docs/R1-2305788.zip) presents ETRI's views on general aspects of AI/ML framework for NR air interface.

### SUMMARY

One or more embodiments provide a method and an apparatus that efficiently manage artificial intelligence (Al)/machine learning (ML) models or AI/ML functionality based on various signaling between a terminal device and a base station device in a wireless communication system using AI/ML-based communication technology. According to a first aspect there is provided a terminal device according to claim 1. According to a second aspect there is provided a base station device according to claim 8. According to a third aspect there is provided a communication method according to claim 12.

According to an aspect of the present disclosure, a terminal device may include: a memory configured to store at least one artificial intelligence (AI) model or at least one AI functionality for performing wireless communication based on AI; a communication interface; and a processor configured to: configure capability information of the terminal device, the capability information including information on a number of at least one AI model or a number of at least one AI functionality, which is supportable by the terminal device, and control the communication interface to transmit a first message including the capability information of the terminal device to a base station device.

According to another aspect of the present disclosure, a base station device may include: a memory; a communication interface; and a processor configured to: control the communication interface to receive a first message (e.g. receive, via the communication interface, the first message) including capability information of a terminal device from the terminal device, configure control information on at least one artificial intelligence (AI) model or at least one AI functionality based on the capability information of the terminal device in the first message, and transmit a second message including the control information to the terminal device, wherein the capability information of the terminal device includes information on a number of at least one AI model or a number of at least one AI functionality, which is supportable by the terminal device.

According to another aspect of the present disclosure, a wireless communication system may include: an electronic device; and an external electronic device, wherein the electronic device is configured to generate a first message including information on a number of at least one artificial intelligence (AI) model or a number of at least one AI functionality, which is supportable by the electronic device, and transmit the first message to the external electronic device, and the external electronic device is configured to generate a second message including control information on the at least one AI model or the at least one AI functionality based on the first message and transmit the second message to the electronic device. The electronic device is further configured to generate a third message including preference information on the at least one AI model or the at least one AI functionality set according to the second message and transmit the third message to the external electronic device, and the external electronic device is further configured to determine whether to update the control information based on the third message.

According to another aspect of the present disclosure, a communication method performed by a terminal device, may include: transmitting capability information from the terminal device to a base station device, the capability information indicating that the terminal device is capable to report an artificial intelligence (AI) functionality preference of the terminal device to the base station device; based on a communication session being set up between the terminal device and the base station device for reporting the AI functionality preference to the base station device, receiving a prohibit timer from the base station device, the prohibit timer prohibiting the terminal device from transmitting an updated AI functionality preference in a predetermined time period; and after the prohibit timer expires, transmitting the updated AI functionality preference from the terminal device to the base station device.

At least some of the above and other features of the invention are set out in the claims.

### BRIEF DESCRIPTION OF DRAWINGS

The above and/or other aspects will be more apparent by describing certain example embodiments, with reference to the accompanying drawings in which:
FIG. 1 illustrates a wireless communication system according to one or more embodiments;
FIG. 2 illustrates an example of an artificial intelligence (Al)/machine learning (ML) framework according to one or more embodiments;
FIG. 3 illustrates the configuration of a terminal device in FIG. 1 according to one or more embodiments;
FIG. 4 illustrates the configuration of a base station device in FIG. 1 according to one or more embodiments;
FIG. 5 is a flow diagram illustrating a method of managing an AI/ML model or AI/ML functionality in a wireless communication system according to one or more embodiments;
FIG. 6 is a flow diagram illustrating a method of managing an AI/ML model or AI/ML functionality in a wireless communication system according to one or more embodiments;
FIG. 7 is a flow diagram illustrating a method of managing an AI/ML model or AI/ML functionality in a wireless communication system according to one or more embodiments;
FIG. 8 is a flow diagram illustrating a method of managing an AI/ML model or AI/ML functionality in a wireless communication system according to one or more embodiments;
FIGS. 9A and 9B are block diagrams illustrating an electronic device according to one or more embodiments; and
FIG. 10 is a diagram illustrating electronic devices to which AI/ML-based communication technology is applied, according to one or more embodiments.

### DETAILED DESCRIPTION

Example embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the example embodiments. However, it is apparent that the example embodiments can be practiced without those specifically defined matters. Also, well-known functions or constructions are not described in detail since they would obscure the description with unnecessary detail.

It will be understood that each block of the processing flow diagrams and combinations of the flow diagrams may be performed by computer program instructions. These computer program instructions may be loaded into a processor of a general-purpose computer, special-purpose computer, or other programmable data processing equipment, and thus, the instructions performed through the processor of the general-purpose computer, special-purpose computer, or other programmable data processing equipment create the means to perform functions described in flow diagram block(s). These computer program instructions may also be stored in computer-usable or computer-readable memory that may be directed to a computer or other programmable data processing equipment to implement a function in a particular manner, and thus, it is also possible to produce manufacturing items containing instruction means to perform functions described in the flow diagram block(s), the instruction means being created by the instructions stored in the computer-usable or computer-readable memory. Computer program instructions may also be loaded on a computer or other programmable data processing equipment, and thus, instructions, which perform a series of operational steps on a computer or other programmable data processing equipment to create computer-executed processes and operate the computer or other programmable data processing equipment, may also provide steps for performing the functions described in the flow diagram block(s).

In addition, each block may represent a module, segment, or portion of code that includes one or more executable instructions for performing specified logical function(s). In addition, it should be noted that in some alternative execution examples it is possible for the functions mentioned in the blocks to occur out of order. For example, it is possible for two blocks shown in succession to be performed substantially at the same time, or it is possible for the two blocks to be performed in reverse order depending on corresponding functions.

The term '~unit' used in the disclosure refers to software, or a hardware component, such as FPGA or ASIC, and the '~unit' performs certain roles. However, '~unit' is not limited to software or hardware.

In describing the embodiments of the disclosure in detail, New RAN (NR), which is a radio access network (RAN) based on the 5G mobile communication standard specified by the 3rd Generation Partnership Project (3GPP) that is a mobile communication standard standardization organization, and Packet Core (5G System, 5G Core Network, or Next Generation (NG) Core), which is a core network, are the main targets. However, the main gist of the disclosure may be applied to other communication systems having similar technical background with slight modifications without significantly departing from the scope of the disclosure, which may be possible at the discretion of a person skilled in the technical field of the disclosure.

In the 5G system, in order to support network automation, the Network Data Collection and Analysis Function (NWDAF), which is a network function that provides the function of analyzing and providing data collected from the 5G network, may be defined. The NWDAF may collect, store, and analyze information from the 5G network and provide the results to an unspecified network function (NF), and the analysis results may be used independently by each NF.

For convenience of description below, some terms and names defined in the 3GPP standard (standard for 5G, NR, LTE, or similar systems) may be used. However, the disclosure is not limited by the terms and names of the disclosure, and may equally apply to systems that comply with other standards.

In the following description, terms referring to signals, terms referring to channels, terms referring to control information, terms referring to network entities, terms referring to device components, etc. are used as examples for convenience of explanation. Therefore, the disclosure is not limited to the terms used in the disclosure, and other terms referring to objects having equivalent technical meaning may be used.

Hereinafter, in the disclosure, high-level signaling refers to a method of transmitting a signal from a base station to a terminal by using a downlink data channel of a physical layer, or from a terminal to a base station by using an uplink data channel of the physical layer. The high-level signaling may be understood as radio resource control (RRC) signaling or media access control (MAC) control element (CE).

In addition, in the disclosure, the expressions '~ greater (or more) than' or '~ less than' are used to determine whether a certain condition is satisfied or fulfilled, but this is only a description for expressing an example and does not exclude descriptions of '~ or more' or '~ or less'. Conditions written as '~ or more' may be replaced with '~ greater (or more) than', conditions written as '~ or less' may be replaced with '~ less than', and conditions written as '~ or more and ~ less than' may be replaced with '~ greater (or more) than and ~ or less'.

In addition, the disclosure describes embodiments by using terms used in some communication standards (e.g., 3GPP), but this is only an example for explanation. Embodiments of the disclosure may be easily modified and applied to other communication systems.

In the disclosure, an artificial intelligence (Al)/machine learning (ML) model may refer to a hardware configuration and/or software configuration for learning (or training) a certain pattern of a data set and/or inferring/predicting the target function of AI/ML-based communication technology based on the learned pattern. An AI model may encompass an ML model. An AI/ML model may comprise a neural network. A neural network may include a series of interconnected artificial neurons (nodes) that are each activated based on an activation function. Parameters of the nodes may define the strength of the activations. By inputting data into the neural network, the data may be processed through the neural network to generate an output (e.g. a prediction). AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication. An AI functionality may encompass a ML functionality.

In the disclosure, a one-sided AI/ML model or one-sided AI/ML functionality may refer to an AI/ML model or AI/ML functionality that is trained either only in the terminal device 100 or only in the base station device 200. That is, a one-sided AI/ML model or one-sided AI/ML functionality may refer to an AI/ML model or AI/ML functionality that is trained or implemented within a single device. For instance, this may implement an AI/ML model or AI/ML functionality only in the terminal device 100 or only in the base station device 200.

In the disclosure, a two-sided AI/ML model or two-sided AI/ML functionality may refer to an AI/ML model or AI/ML functionality that is trained in both the terminal device 100 and the base station device 200. The two-sided AI/ML model and the two-sided AI/ML functionality may be also referred to as a distributed AI/ML model and a distributed AI/ML functionality. For instance, this may implement an AI/ML model or AI/ML functionality within both the terminal device 100 and the base station device 200. The AI/ML model or AI/ML functionality may differ between the terminal device 100 and the base station device 200 (e.g. the terminal device 100 may be provided with a first AI/ML model or AI/ML functionality and the base station device 200 may be provided with a second AI/ML model or AI/ML functionality. The first AI/ML model or AI/ML functionality may be configured to interact with the second AI/ML model or AI/ML functionality (and vice-versa) to provide the two-sided AI/ML model or the two-sided AI/ML functionality.

In the disclosure, an electronic device may represent the terminal device 100, and an external electronic device may represent the base station device 200.

In the disclosure, embodiments described in terms of the operation of the terminal device 100 may also be performed in the operation of the base station device 200, and embodiments described in terms of the operation of the base station device 200 may also be performed in the operation of the terminal device 100.

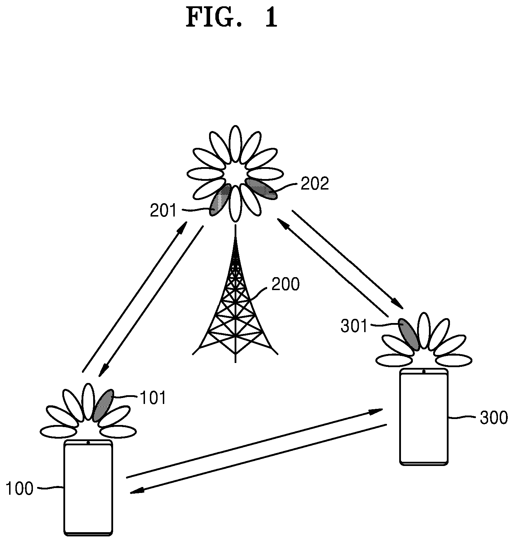

FIG. 1 illustrates a wireless communication system according to one or more embodiments.

FIG. 1 shows a terminal 100, a base station 200, and a terminal 300 as some of the nodes that use a wireless channel in the wireless communication system. FIG. 1 shows only one base station, but other base stations having an identical or similar structure to that of the base station 200 may be further included in the wireless communication system.

The base station 200 is a network infrastructure that provides wireless access to the terminals 100 and 300. The base station 200 has coverage defined as a certain geographic area based on the distance over which signals may be transmitted. The base station 200 may be referred to as 'access point (AP)', 'eNodeB (eNB)', '5th generation node (5G node)', 'next generation nodeB (gNB)', 'wireless point', 'transmission/reception point (TRP)', or other terms with equivalent technical meaning in addition to a base station.

Each of the terminal 100 and the terminal 300 is a device used by a user and communicates with the base station 200 through a wireless channel. The link from the base station 200 to the terminal 100 or the terminal 300 is referred to as downlink (DL), and the link from the terminal 100 or the terminal 300 to the base station 200 is referred to as uplink (UL). In addition, the terminal 100 and the terminal 300 may communicate with each other through a wireless channel. In this case, the link between the terminal 100 and the terminal 300 is referred to as a sidelink, and the sidelink may also be referred to as a PC5 interface. In some cases, at least one of the terminal 100 and the terminal 300 may be operated without user involvement. That is, at least one of the terminal 100 and the terminal 300 may be a device that performs machine type communication (MTC) and may not be carried by the user. Each of the terminal 100 and the terminal 300 may be referred to as 'user equipment (UE)', 'mobile station', 'subscriber station', 'remote terminal', 'wireless terminal', 'user device', or other terms with equivalent technical meaning in addition to a terminal.

The base station 200, the terminal 100, and the terminal 300 may transmit and receive wireless signals in the millimeter wave (mmWave) band (e.g., signals in the frequency range of ~30-300 GHz, such as 28 GHz, 30 GHz, 38 GHz, and 60 GHz). In this case, to improve channel gain, the base station 200, the terminal 100, and the terminal 300 may perform beamforming. The beamforming may include transmission beamforming and reception beamforming. That is, the base station 200, the terminal 100, and the terminal 300 may provide directionality to a transmitted signal or a received signal. To this end, the base station 200 and the terminals 100 and 300 may select serving beams 201, 202, 101, and 301 through a beam search or beam management procedure. After the serving beams 201, 202, 101, and 301 are selected, subsequent communication may be performed through a resource (e.g. wireless resource) in a quasi co-located (QCL) relationship with a resource that is transmitted using the serving beams 201, 202, 101, and 301.

A first antenna port and a second antenna port may be evaluated to be in a QCL relationship if the large-scale characteristics (e.g. channel condition) of a channel carrying symbols on the first antenna port may be inferred from a channel carrying symbols on the second antenna port. For example, the large-scale characteristics may include at least one of delay spread, doppler spread, doppler shift, average gain, average delay, and spatial receiver parameter. That is, there may be a correlation between the characteristics (e.g. large-scale characteristics, or channel condition) of the first and second antenna ports.

The terminal 100 shown in FIG. 1 may support vehicle communication. In the case of the vehicle communication, in an LTE system, standardization work on V2X technology was completed in 3GPP Release 14 and Release 15 based on the device-to-device (D2D) communication structure, and efforts are currently underway to develop V2X technology based on 5G NR. In NR V2X, unicast communication, groupcast (or multicast) communication, and broadcast communication between terminals may be supported. In addition, unlike LTE V2X, which aims to transmit and receive basic safety information required for vehicle driving on the road, NR V2X aims to provide more advanced services, such as platooning, advanced driving, extended sensor, and remote driving.

Hereinafter, a base station is an entity that performs resource allocation for a terminal, and may be a base station that supports both V2X communication and general cellular communication, or a base station that supports only V2X communication. That is, the base station may refer to an NR base station (e.g., gNB), an LTE base station (e.g., eNB), or a roadside unit (RSU). Examples of terminals may include not only general UE and a mobile station, but also a vehicle supporting vehicular-to-vehicular (V2V) communication, a vehicle supporting vehicular-to-pedestrian (V2P) communication, a vehicle or pedestrian handset (e.g., smartphone) supporting V2P communication, a vehicle supporting vehicular-to-network (V2N) communication, a vehicle supporting vehicular-to-infrastructure (V2I) communication, an RSU equipped with a terminal function, an RSU equipped with a base station function, and RSU equipped with part of a base station function and part of a terminal function.

A base station and a terminal are connected through an uplink (UL)/downlink (DL) interface. The uplink (UL) refers to a wireless link through which a terminal transmits data or control signals to a base station, and the downlink (DL) refers to a wireless link through which a base station transmits data or control signals to a terminal.

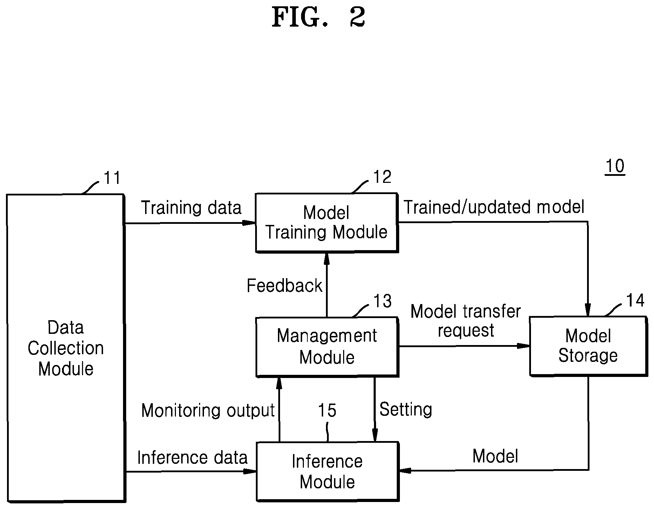

As the 5G wireless communication system is commercialized, various types of connected devices may be connected to the communication network. Accordingly, it is expected that strengthening the functions and performance of the 5G wireless communication system and integrated operation of connected devices will be necessary. In particular, in 3GPP Release 18, various study items were conducted to introduce/apply AI/ML-based communication technology to 5G NR wireless communication systems. For example, in 3GPP Release 18, there are plans to apply AI/ML-based communication technology to three representative cases (e.g., channel state information (CSI) reporting, beam management, and positioning). Prior to applying AI/ML-based communication technology to the three cases described above, 3GPP constructed a basic framework for AI/ML, which represents the entire procedure of life cycle management (LCM) of AI/ML. This is described below with reference to FIG. 2.

Specifically, LCM of AI/ML may be subdivided into model ID-based LCM and functionality-based LCM. An AI/ML model may refer to a hardware configuration and/or software configuration for learning (or training) a certain pattern of a data set and/or inferring/predicting the target function of AI/ML-based communication technology based on the learned pattern. Model ID represents a unique identifier (e.g., logical model-ID, serial number, index, or the like) for each AI/ML model. For example, mapping the logical model-ID to an actually implemented physical model ID may be performed according to the implementation of each terminal device 100. AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

FIG. 2 illustrates an example of an AI/ML framework 10 according to one or more embodiments. The AI/ML framework 10 may be configured using components included in a terminal device and a base station.

Referring to FIG. 2, the AI/ML framework 10 according to one or more embodiments may include a data collection module 11, a model training module 12, a management module 13, a model storage 14, and an inference module 15. Each of the terminal device 100 and the base station device 200 according to one or more embodiments may correspond to at least one of the data collection module 11, the model training module 12, the management module 13, the model storage 14, and the inference module 15.

The data collection module 11 may collect data needed to define at least one AI/ML model or at least one AI/ML functionality. The data may be collected in advance and/or in real time (e.g. during training and/or inference). The data collection module 11 may transmit the collected data to the model training module 12 as data (e.g., training data) for training at least one AI/ML model or at least one AI/ML functionality. The data collection module 11 may transmit the collected data to the inference module 15 as data (e.g., inference data) for inference of at least one AI/ML model or at least one AI/ML functionality.

The model training module 12 may train at least one AI/ML model or at least one AI/ML functionality based on training data received from the data collection module 11. Training may comprise updating model parameters using an optimization method (e.g. to optimize the output of an objective function, such as to minimize an error, or loss). The model training module 12 may transmit the trained at least one AI/ML model or at least one AI/ML functionality to the model storage 14.

The model training module 12 may update previously set at least one AI/ML model or at least one AI/ML functionality based on the training data received from the data collection module 11 and the feedback of an inference result received from the management module 13. The model training module 12 may transmit the updated at least one AI/ML model or at least one AI/ML functionality to the model storage 14.

The model storage 14 may store the trained at least one AI/ML model or at least one AI/ML functionality received from the model training module 12. The model storage 14 may store the updated at least one AI/ML model or at least one AI/ML functionality received from the model training module 12.

The model storage 14 may transmit the stored at least one AI/ML model or at least one AI/ML functionality to the inference module 15 in response to receiving a model transfer request from the management module 13. The model may include at least one AI/ML model or at least one AI/ML functionality.

The inference module 15 may operate at least one AI/ML model or at least one AI/ML functionality based on inference data and perform inference (or estimation) on a certain function (or feature) or certain function group (or feature group) of target AI/ML-based communication technology.

The inference module 15 may generate a monitoring result for the operational performance (e.g., inference performance) of at least one AI/ML model or for the operational performance (e.g., inference performance) of at least one AI/ML functionality and output the monitoring result to the management module 13.

The management module 13 may maintain or update (or change) at least one setting for at least one AI/ML model or at least one AI/ML functionality based on the monitoring result received from the inference module 15. When updating the at least one setting for at least one AI/ML model or at least one AI/ML functionality, the management module 13 may transmit changed control information (Setting) on the at least one AI/ML model or at least one AI/ML functionality to the inference module 15. In this case, the control information (Setting) may include information indicating any one of switching, selection, activation, and deactivation of previously set at least one AI/ML model or at least one AI/ML functionality, or fallback that returns to at least one default AI/ML model or at least one default AI/ML functionality. For example, when at least one AI/ML model has to be selected according to a certain communication environment, the management module 13 may transmit control information (Setting) including a shared model-ID (pre-defined) to the inference module 15. The inference module 15 shares, with the management module 13, the ID of at least one AI/ML model supportable by the inference module 15.

The management module 13 may generate feedback on the performance and/or training direction of at least one AI/ML model or at least one AI/ML functionality based on the monitoring result and transmit the generated feedback to the model training module 12. The model training module 12 may re-train at least one AI/ML model or at least one AI/ML functionality by reflecting the feedback received from the management module 13 in a training process. The management module 13 may store at least one re-trained AI/ML model or at least one re-trained AI/ML functionality in the model storage 14.

As described above, the management module 13 may require various signaling with the inference module 15 to efficiently manage at least one AI/ML model or at least one AI/ML functionality. For example, the management module 13 may update at least one AI/ML model or at least one AI/ML functionality based on signaling between a terminal device and a base station.

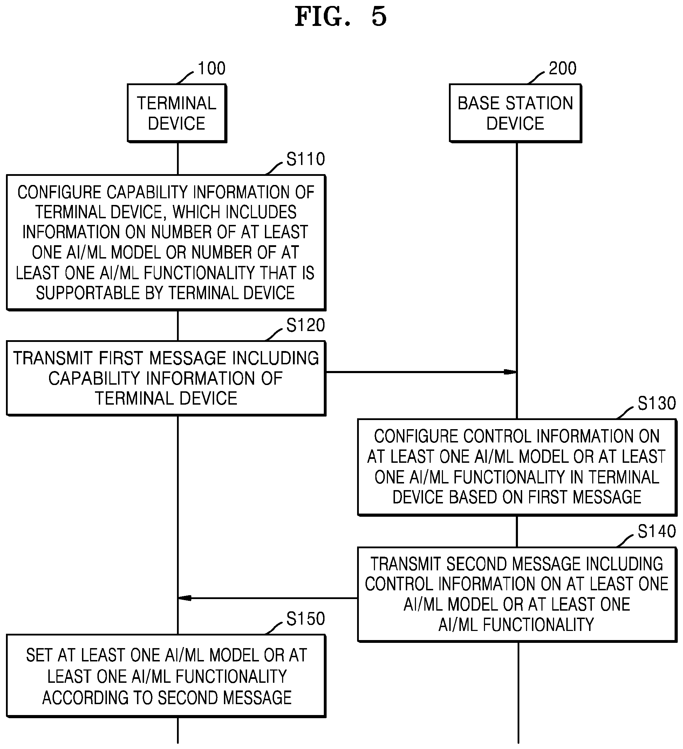

One or more embodiments according to the disclosure may provide a method and apparatus for efficiently managing at least one AI/ML model or at least one AI/ML functionality based on signaling (e.g., capability information of the inference module 15, preference information, and signaling control information between the terminal device 100 and the base station device 200) between the inference module 15 (e.g., the terminal device 100 in FIG. 1) and the management module 13 (e.g., the base station device 200 in FIG. 1). A detailed description is given below with reference to FIGS. 5 to 8.

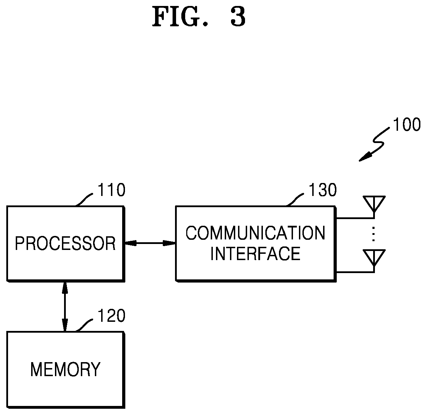

Hereinafter, with reference to the drawings (e.g., FIGS. 3 to 10), for convenience of explanation, the inference module 15 is described as the terminal device 100 and the management module 13 is described as the base station device 200. However, the disclosure is not limited thereto. The inference module 15 according to one or more embodiments may be either the terminal device 100 or the base station device 200 depending on the communication environment or scenario, and the management module 13 may be either the terminal device 100 or the base station device 200 depending on the communication environment or scenario.

The apparatus and method according to various embodiments may reduce unnecessary signaling and processing between the terminal device 100 and the base station device 200 by managing the AI/ML model or AI/ML functionality based on signaling (e.g., capability information and/or preference information of the terminal device 100) between the terminal device 100 and the base station device 200.

Furthermore, embodiments of the present disclosure may prevent the waste of wireless resources and/or process delays due to unnecessary signaling/processing. Thus, the management of the AI/ML model or AI/ML functionality may be efficiently performed.

In addition, various embodiments of the disclosure may prevent excessive signaling overhead by controlling the transmission timing of signaling between the terminal device 100 and the base station device 200.

FIG. 3 illustrates the configuration of the terminal device 100 in FIG. 1 according to one or more embodiments.

Referring to FIG. 3, the terminal device 100 includes a processor 110, a memory 120, and a communication interface 130. The processor 110, the memory 120, and the communication interface 130 may be implemented as hardware, software, or a combination of hardware and software. For example, the communication interface may be implemented by any one or any combination of a digital modem, a radio frequency (RF) modem, an antenna circuit, a WiFi chip, and related software and/or firmware.

The communication interface 130 may transmit and receive signals through a wireless channel. For example, the communication interface 130 performs a conversion function between a baseband signal and a bit string according to the physical layer specification of a system. For example, when transmitting data, the communication interface 130 generates complex symbols by encoding and modulating a transmission bit string. In addition, when receiving data, the communication interface 130 restores a reception bit string by demodulating and decoding the baseband signal. In addition, the communication interface 130 upconverts a baseband signal into an RF band signal and transmits the RF band signal through an antenna, and downconverts an RF band signal received through the antenna into a baseband signal. For example, the communication interface 130 may include a transmission filter, a reception filter, an amplifier, a mixer, an oscillator, a digital-to-analog converter (DAC), an analog-to-digital converter (ADC), and the like.

In addition, the communication interface 130 may include a plurality of transmission and reception paths. Furthermore, the communication interface 130 may include at least one antenna array including a plurality of antenna elements. In terms of hardware, the communication interface 130 may include a digital circuit and an analog circuit (e.g., radio frequency integrated circuit (RFIC)). In this case, the digital circuit and the analog circuit may be implemented in one package. In addition, the communication interface 130 may include a plurality of RF chains. Furthermore, the communication interface 130 may perform beamforming.

The communication interface 130 transmits and receives signals, as described above. Accordingly, all or part of the communication interface 130 may be referred to as a 'transmitter', a 'receiver', or a 'transceiver'. In addition, in the following description, transmission and reception performed through a wireless channel are used to mean that the processing as described above is performed by the communication interface 130.

The memory 120 stores data, such as a basic program (e.g., operating system or system software), an application program, and setting information for the operation of the terminal device 100. The memory 120 may include volatile memory, non-volatile memory, or a combination of volatile memory and non-volatile memory. The memory 120 provides stored data according to the request of the processor 110. In one or more embodiments, the memory 120 may store at least one AI/ML model or at least one AI/ML functionality group for AI/ML-based wireless communication between the terminal device 100 and the base station device 200.

The processor 110 controls overall operations of the terminal device 100. For example, the processor 110 transmits and receives signals through the communication interface 130. In addition, the processor 110 writes data into the memory 120 and reads data from the memory 120. In addition, the processor 110 may perform protocol stack functions required by communication standards. To this end, the processor 110 may include at least one processor or microprocessor, or may be a portion of a processor. In addition, a portion of the communication interface 130 and the processor 110 may be referred to as a communication processor (CP). According to embodiments, the processor 110 may control the terminal device 100 to perform operations (operations of FIGS. 5 to 8) according to embodiments described below.

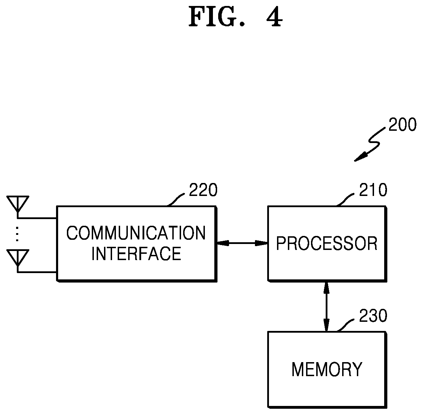

FIG. 4 illustrates the configuration of the base station device 200 in FIG. 1 according to one or more embodiments.

Referring to FIG. 4, the base station device 200 includes a processor 210, a communication interface 220, and a memory 230. The processor 210, the communication interface 220, and the memory 230 may be implemented as hardware, software, or a combination of hardware and software.

The communication interface 220 performs functions for transmitting and receiving signals through a wireless channel. For example, the communication interface 220 performs a conversion function between a baseband signal and a bit string according to the physical layer specification of a system. For example, when transmitting data, the communication interface 220 generates complex symbols by encoding and modulating a transmission bit string. In addition, when receiving data, the communication interface 220 restores a reception bit string by demodulating and decoding the baseband signal.

In addition, the communication interface 220 upconverts a baseband signal into an RF band signal and transmits the RF band signal through an antenna, and downconverts an RF band signal received through the antenna into a baseband signal. To this end, the communication interface 220 may include a transmission filter, a reception filter, an amplifier, a mixer, an oscillator, a DAC, an ADC, and the like. In addition, the communication interface 220 may include a plurality of transmission and reception paths. Furthermore, the communication interface 220 may include at least one antenna array including a plurality of antenna elements.

In terms of hardware, the communication interface 220 may include a digital unit and an analog unit, and the analog unit may include a plurality of sub-units depending on operating power, operating frequency, and the like. The digital unit may be implemented with at least one processor (e.g., digital signal processor (DSP)).

The communication interface 220 transmits and receives signals, as described above. Accordingly, all or part of the communication interface 220 may be referred to as a 'transmitter', a 'receiver', or a 'transceiver'. In addition, in the following description, transmission and reception performed through a wireless channel are used to mean that the processing as described above is performed by the communication interface 220.

The communication interface 220 provides an interface to perform communication (e.g., backhaul communication) with other nodes in the network. That is, the communication interface 220 converts a bit string transmitted from the base station device 200 to another node, for example, another access node, another base station, a higher node, or a core network, into a physical signal, and converts a physical signal received from another node into a bit string.

The memory 230 stores data, such as a basic program, an application program, and setting information for the operation of the base station device 200. The memory 230 may include volatile memory, non-volatile memory, or a combination of volatile memory and non-volatile memory. The memory 230 provides stored data according to the request of the processor 210.

The processor 210 controls overall operations of the base station device 200. For example, the processor 210 transmits and receives signals through the communications module 220. In addition, the processor 210 writes data into the memory 230 and reads data from the memory 230. In addition, the processor 210 may perform the functions of a protocol stack required by communication standards. According to another implementation example, the protocol stack may be included in the communication interface 220. To this end, the processor 210 may include at least one processor. According to embodiments, the processor 210 may control the base station device 200 to perform operations (operations of FIGS. 5 to 8) according to embodiments described below.

FIG. 5 is a flow diagram illustrating a method of managing an AI/ML model or AI/ML functionality in a wireless communication system according to one or more embodiments.

Referring to FIG. 5, a method of managing an AI/ML model or AI/ML functionality based on signaling between the terminal device 100 and the base station device 200 in a wireless communication system may include operations S110 to S150. Signaling between the terminal device 100 and the base station device 200 in FIG. 5 may be part of an initial setup procedure of the wireless communication connection between the terminal device 100 and the base station device 200, but is not limited thereto.

In the disclosure, the AI/ML model may refer to a hardware configuration and/or software configuration for learning (or training) a certain pattern of a data set and/or inferring/predicting the target function of AI/ML-based communication technology based on the learned pattern. The AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

In the disclosure, a one-sided AI/ML model or one-sided AI/ML functionality may refer to an AI/ML model or AI/ML functionality that is trained either in only the terminal device 100 or only the base station device 200.

In the disclosure, a two-sided AI/ML model or two-sided AI/ML functionality may refer to an AI/ML model or AI/ML functionality that is trained in both the terminal device 100 and the base station device 200.

In operation S110, the terminal device 100 may configure capability information of the terminal device 100, which includes information on the number of at least one AI/ML model or the number of at least one AI/ML functionality that is supportable by the terminal device 100. For example, different identifications (IDs) or serial numbers may be assigned to each AI/ML model and/or AI/ML functionality in a one-to-one correspondence. The terminal device 100 may provide the count of these IDs or serial numbers to the base station device 200, as the number of AI/ML models and/or functionalities. In operation S120, the terminal device 100 may transmit a first message including the capability information of the terminal device 100 to the base station device 200. In this case, the first message may be transmitted through various types of signaling including UE capability signaling between the terminal device 100 and the base station device 200.

In one or more embodiments, the capability information of the terminal device 100 may include information on the maximum number of at least one AI/ML model that is supportable by the terminal device 100. The capability information of the terminal device 100 may include information as shown in [Table 1]. For example, when the maximum number of at least one AI/ML model supportable by the terminal device 100 is 'a', the terminal device 100 may enter 'a' in the NR_AIML_Max_UE_model (e.g., the capability information of the terminal device 100) of [Table 1] and transmit the NR_AIML_Max_UE_model, in which 'a' is entered, to the base station device 200 (where a, b, c, d, e, f, and nmax are integers that are 0 or more, and nmax (the maximum number of AI/ML models for any terminal device) may be defined in the 3GPP mobile communication standard.).

**[Table 1]**

| |
|---|
| NR_AIML_Max_UE_model ::= ENUMERATED { |
| a, b, c, d, e, f, ... , nmax, spare} |

In one or more embodiments, the capability information of the terminal device 100 may include information on the maximum number of at least one AI/ML functionality that is supportable by the terminal device 100. For example, when the maximum number of at least one AI/ML functionality supportable by the terminal device 100 is 'b', the terminal device 100 may enter 'b' in the NR_AIML_Max_UE_functionality (e.g., the capability information of the terminal device 100) of [Table 2] and transmit the NR_AIML_Max_UE_functionality, in which 'b' is entered, to the base station device 200 (where a, b, c, d, e, f, and nmax are integers that are 0 or more, and nmax (the maximum number of AI/ML functionalities for any terminal device) may be defined in the 3GPP mobile communication standard.).

**[Table 2]**

| |
|---|
| NR_AIML_Max_UE_functionality ::= ENUMERATED { |
| a, b, c, d, e, f, ... , nmax, spare} |

In one or more embodiments, the capability information of the terminal device 100 may include at least one of information on the maximum number of one-sided AI/ML models supportable by the terminal device 100 from among at least one AI/ML model and information on the maximum number of two-sided AI/ML models supportable by the terminal device 100 from among the at least one AI/ML model. For example, when the maximum number of one-sided AI/ML models supportable by the terminal device 100 is 'c' and the maximum number of two-sided AI/ML models supportable by the terminal device 100 is 'd', the terminal device 100 may enter 'c' in the NR_AIML_Max_UE_model_onesided (e.g., the capability information of the terminal device 100) of [Table 3] and enter 'd' in the NR_AIML_Max_UE_model_twosided (e.g., the capability information of the terminal device 100) of [Table 3] and may transmit the NR_AIML_Max_UE_model_onesided, in which 'c' is entered, and the NR_AIML_Max_UE_model_twosided, in which 'd' is entered, to the base station device 200 (where a, b, c, d, e, f, and nmax are integers that are 0 or more, and nmax (the maximum number of AI/ML models for any terminal device) may be defined in the 3GPP mobile communication standard.). Information (e.g., NR_AIML_Max_UE_model_onesided) on the maximum number of one-sided AI/ML models supportable by the terminal device 100 in [Table 3], and information (e.g., NR_AIML_Max_UE_model_ twosided) on the maximum number of two-sided AI/ML models supportable by the terminal device 100 from among the at least one AI/ML model may be transmitted together or separately as needed.

**[Table 3]**

| |
|---|
| NR_AIML_Max_UE_model_onesided ::= ENUMERATED { |
| a, b, c, d, e, f, ... , nmax, spare} |
| NR_AIML_Max_UE_model_twosided ::= ENUMERATED { |
| a, b, c, d, e, f, ... , nmax, spare} |

In one or more embodiments, the capability information of the terminal device 100 may include at least one of information on the maximum number of one-sided AI/ML functionalities supportable by the terminal device 100 from among at least one AI/ML functionality and information on the maximum number of two-sided AI/ML functionalities supportable by the terminal device 100 from among the at least one AI/ML functionality.

For example, when the maximum number of one-sided AI/ML functionalities supportable by the terminal device 100 is 'e' and the maximum number of two-sided AI/ML functionalities supportable by the terminal device 100 is 'f', the terminal device 100 may enter 'e' in the NR_AIML_Max_UE_functionality_onesided (e.g., the capability information of the terminal device 100) of [Table 4] and enter 'f' in the NR_AIML_Max_UE_functionality_twosided (e.g., the capability information of the terminal device 100) of [Table 4] and may transmit the NR_AIML_Max_UE_functionality_onesided, in which 'e' is entered, and the NR_AIML_Max_UE_functionality_twosided, in which 'f' is entered, to the base station device 200 (where a, b, c, d, e, f, and nmax are integers that are 0 or more, and nmax (the maximum number of AI/ML functionalities for any terminal device) may be defined in the 3GPP mobile communication standard.). Information (e.g., NR_AIML_Max_UE_functionality_onesided) on the maximum number of one-sided AI/ML functionalities supportable by the terminal device 100 in [Table 4], and information (e.g., NR_AIML_Max_UE_functionality_twosided) on the maximum number of two-sided AI/ML functionalities supportable by the terminal device 100 from among the at least one AI/ML functionality may be transmitted together or separately as needed.

**[Table 4]**

| |
|---|
| NR_AIML_Max_UE_functionality_onesided ::= ENUMERATED { |
| a, b, c, d, e, f, ... , nmax, spare} |
| NR_AIML_Max_UE_functionality_twosided ::= ENUMERATED { |
| a, b, c, d, e, f, ... , nmax, spare} |

In one or more embodiments, information (e.g., NR_AIML_Max_UE_model_onesided and NR_AIML_Max_UE_model_twosided) on the maximum number of one-sided/two-sided AI/ML models supportable by the terminal device 100 in [Table 3] and information (e.g., NR_AIML_Max_UE_functionality_onesided and NR_AIML_Max_UE_functionality_twosided) on the maximum number of one-sided/two-sided AI/ML functionalities supportable by the terminal device 100 in [Table 4] may be transmitted together or separately as needed.

In operation S130, the base station device 200 may configure control information on at least one AI/ML model or at least one AI/ML functionality in the terminal device 100 based on the first message. In operation S140, the base station device 200 may transmit a second message including the control information on at least one AI/ML model or at least one AI/ML functionality to the terminal device 100. In this case, the control information may include information or instructions for switching, selection, activation, and/or deactivation of previously set at least one AI/ML model or at least one AI/ML functionality. The control information may also include fallback instructions for reverting back to default AI/ML models or default AI/ML functionalities. For example, when a certain AI/ML model has to be selected, the base station device 200 may transmit, to the terminal device 100, control information instructing the terminal device 100 to set an AI/ML model according to a pre-shared (e.g. pre-defined) model-ID.

In operation S150, the terminal device 100 may set at least one AI/ML model or at least one AI/ML functionality according to the second message. For example, the terminal device 100 may set at least one AI/ML model or at least one AI/ML functionality based on the control information of the base station device 200 included in the second message.

As described above, the base station device 200 may request a specific AI/ML model or functionality from the terminal device 100 through the second message (e.g., control information). The terminal device 100 may provide feedback, reporting the AI/ML model or AI/ML functionality that best matches the request from among the options that the terminal device 100 supports (i.e., at least one AI/ML model or at least one AI/ML functionality stored in and supportable by the terminal device 100). Thereafter, if the operational performance of the AI/ML model or functionality set according to the previous second message (e.g., control information) is found to be inadequate (e.g., lower than a predetermined performance threshold), the base station device 200 transmits an updated second message (e.g., changed/reconfigured control information) to the terminal device 100. However, if the base station device 200 does not have prior knowledge of the maximum number of AI/ML models or functionalities that is supportable by the terminal device 100 (i.e., capability information of the terminal device 100 for the AI/ML model or functionality), it may lead to inefficient use of communication resources and communication delays due to unnecessary signaling, such as repeated requests for AI/ML model resets or redundant feedback.

One or more embodiments according to the disclosure may addresses these issues by providing provide an apparatus and method capable of efficiently performing management of an AI/ML model or functionality. By including capability information in the signaling-specifically, the maximum number of AI/ML models or functionalities that the terminal device 100 can support-unnecessary signaling and communication delays are minimized. This results in more effective management of AI/ML resources, reducing waste and improving overall system.

The operation of the terminal device 100 shown in FIG. 5 may also be performed by the base station device 200 or through interactions with the base station device 200, and the operation of the base station device 200 may also be performed by the terminal device 100 or through interactions with the terminal device 100. That is, the terminal device 100 of FIG. 5 may be a first device that is either a terminal device or base station, and the base station device 200 of FIG. 5 may be a second device that is either a terminal device or a base station.

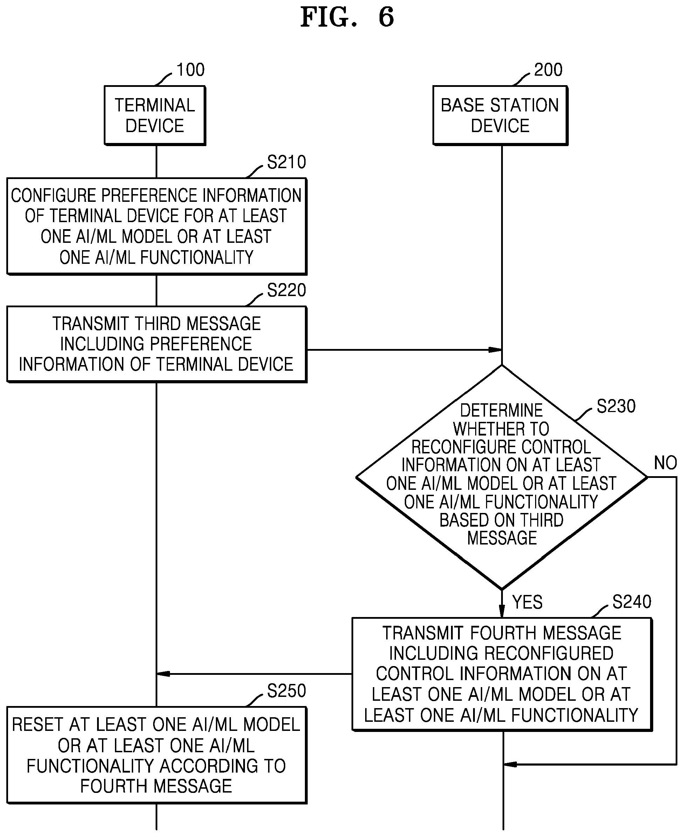

FIG. 6 is a flow diagram illustrating a method of managing an AI/ML model or AI/ML functionality in a wireless communication system according to one or more embodiments.

Referring to FIG. 6, a method of managing an AI/ML model or AI/ML functionality based on signaling between the terminal device 100 and the base station device 200 in a wireless communication system may include operations S210 to S250. In the descriptions of FIG. 6, descriptions that are substantially the same as those given with reference to FIG. 5 are replaced with the descriptions of FIG. 5.

In the disclosure, the AI/ML model may refer to a hardware configuration and/or software configuration for learning (or training) a certain pattern of a data set and/or inferring/predicting the target function of AI/ML-based communication technology based on the learned pattern. The AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

The terminal device 100 may notify the base station device 200 of the preference information reporting capability (i.e., the terminal device 100 can transmit/report an opinion on at least one AI/ML model or at least one AI/ML functionality to the base station device 200) of the terminal device 100 in advance during the process (e.g., an initial setup process) of establishing a wireless communication connection with the base station device 200.

In operation S210, the terminal device 100 may configure preference information of the terminal device 100 for at least one AI/ML model or at least one AI/ML functionality, and in operation S220, the terminal device 100 may transmit a third message including the preference information of the terminal device 100. In this case, the preference information may be included in UE assistance information (UAI) (e.g. as defined in 3GPP Release 15), but is not limited thereto and may be transmitted to the base station device 200 through various forms of higher layer signaling.

In one or more embodiments, the terminal device 100 may monitor the operational performance of the at least one AI/ML model previously set, or the operational performance of the at least one AI/ML functionality, and may configure preference information on the at least one AI/ML model or the at least one AI/ML functionality. In this case, the preference information may include information requesting, by the terminal device 100, to reset the at least one AI/ML model or the at least one AI/ML functionality (e.g., information requesting selection, activation, deactivation, switching, or fallback of the at least one AI/ML model or the at least one AI/ML functionality). The preference information of the terminal device 100 may include information as shown in [Table 5]. For example, the terminal device 100 may transmit, to the base station device 200, the preference information of the terminal device 100 on each of selection, activation, deactivation, switching, and fallback in AIML-Assistance-r19 of [Table 5]. In another example, the terminal device 100 may select a preferred one among selection, activation, deactivation, switching, and fallback in AIML-Assistance-r19 of [Table 5] based on the monitoring result and transmit the selected one to the base station device 200.

**[Table 5]**

| |
|---|
| AIML-Assistance-r19 ::= SEQUENCE { |
| AIML-Preferred-operation-r19 ENUMERATED {selection, activation, deactivation, switching, and fallback operation} OPTIONAL, |
| OPTIONAL |
| } |

In this case, in AIML-Assistance-r19 of [Table 5], each of selection, activation, deactivation, switching, and fallback may be displayed as mapped data. For example, when the terminal device 100 requests the base station device 200 to perform a switching operation for an AI/ML model or AI/ML functionality, data '010' mapped to the switching may be entered into the AIML-Assistance-r19 of [Table 5] and be transmitted.

As described above, an example of a method of displaying preference information of the terminal device 100 has been described. However, the disclosure is not limited thereto, and preference information according to one or more embodiments may be displayed in various forms and transmitted to the base station device 200.

In operation S230, the base station device 200 may determine whether to reconfigure control information on at least one AI/ML model or at least one AI/ML functionality based on the third message. The base station device 200 may perform operation S240 when reconfiguring control information on at least one AI/ML model or at least one AI/ML functionality based on the third message, and may terminate the operation when not reconfiguring control information on at least one AI/ML model or at least one AI/ML functionality based on the third message, that is, may maintain control information on at least one existing AI/ML model or at least one existing AI/ML functionality.

In operation S240, the base station device 200 may transmit a fourth message including reconfigured control information on at least one AI/ML model or at least one AI/ML functionality.

In operation S250, the terminal device 100 may reset at least one AI/ML model or at least one AI/ML functionality according to the fourth message. For example, the terminal device 100 may perform selection, activation, deactivation, switching, or fallback operation on at least one AI/ML model or at least one AI/ML functionality according to the fourth message.

As described above, in one or more embodiments according to the disclosure, when it is monitored that the operational performance of previously set at least one AI/ML model or at least one AI/ML functionality deteriorates (e.g., when the operational performance becomes lower than a predetermined performance threshold), the terminal device 100 may configure preference information of the terminal device 100 based on the monitoring result and transmit the preference information to the base station device 200. The operational performance of an AI/ML model or functionality may be assessed using measurements of one or more of the following metrics: accuracy and error rates (e.g., by comparing model predictions with ground-truth or reference data), response time, throughput (e.g., the number of data items such as images processed per minute), resource utilization (e.g., CPU or memory usage), and user feedback. That is, when the operational performance of previously set at least one AI/ML model or at least one AI/ML functionality deteriorates/becomes unnecessary, the terminal device 100 may transmit a reset request for at least one AI/ML model or at least one AI/ML functionality as preference information to the base station device 200.

Therefore, one or more embodiments according to the disclosure may provide an apparatus and method capable of performing adaptive management of an AI/ML model or AI/ML functionality through signaling including preference information (i.e., information requesting reset to the AI/ML model or AI/ML functionality preferred by the terminal device 100) of the terminal device 100 configured based on a monitoring result of the operational performance of previously set at least one AI/ML model or at least one AI/ML functionality between the terminal device 100 and the base station device 200.

The operation of the terminal device 100 shown in FIG. 6 may also be performed by the base station device 200 or via interactions with the base station device 200, and the operation of the base station device 200 may also be performed by the terminal device 100 or via interactions with the terminal device 100. That is, the terminal device 100 of FIG. 6 may be a first device that is either a terminal device or base station, and the base station device 200 of FIG. 6 may be a second device that is either a terminal device or a base station.

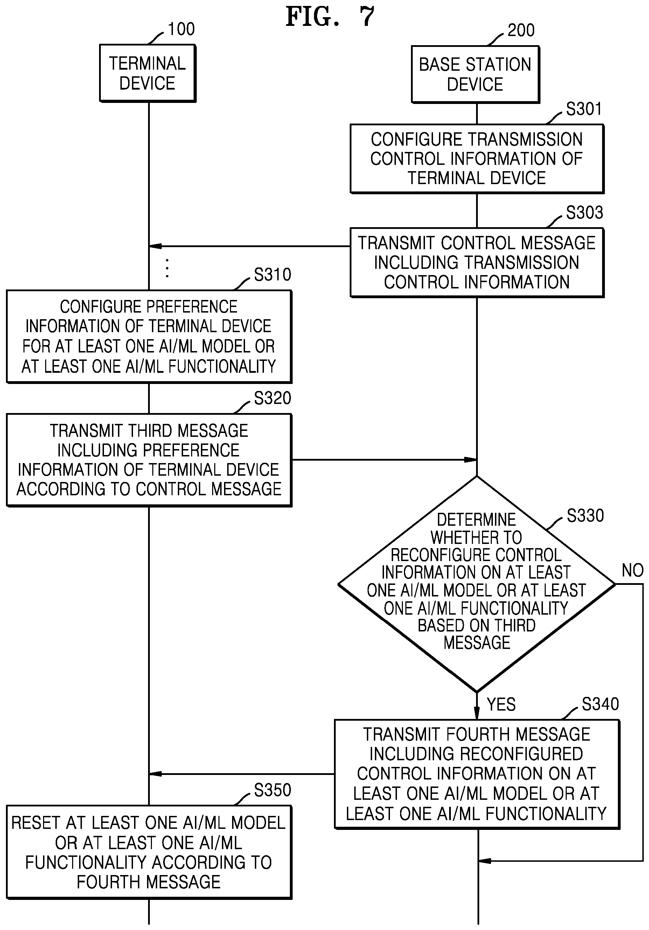

FIG. 7 is a flow diagram illustrating a method of managing an AI/ML model or AI/ML functionality in a wireless communication system according to one or more embodiments.

In detail, FIG. 7 is a diagram illustrating a method of managing an AI/ML model or AI/ML functionality based on signaling (e.g., signaling of transmission control information) between the terminal device 100 and the base station device 200.

Referring to FIG. 7, a method of managing an AI/ML model or AI/ML functionality based on signaling between the terminal device 100 and the base station device 200 in a wireless communication system may include operations S301 to S350.

In the disclosure, the AI/ML model may refer to a hardware configuration and/or software configuration for learning (or training) a certain pattern of a data set and/or inferring/predicting the target function of AI/ML-based communication technology based on the learned pattern. The AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

The terminal device 100 may notify the base station device 200 of the preference information reporting capability (i.e., the terminal device 100 can transmit/report an opinion on at least one AI/ML model or at least one AI/ML functionality to the base station device 200) of the terminal device 100 in advance during the process (e.g., an initial setup process) of establishing a wireless communication connection with the base station device 200.

In operation S301, the base station device 200 may configure transmission control information for the terminal device 100, and in operation S303, the base station device 200 may transmit a control message including the transmission control information. In this case, the control message may be signaling in the initial setup procedure or RRCReconfiguration procedure of the wireless communication connection between the terminal device 100 and the base station device 200, but is not limited thereto.

In one or more embodiments, the transmission control information may include a prohibit timer, which specifies a holding period during which the terminal device 100 is prevented from transmitting the third message (including preference information of the terminal device 100) shown in FIG. 6. The holding period may be predetermined by the base station device 200. The transmission control information may include information as shown in [Table 6]. For example, the transmission control information may include information on the transmission time of the third message, a period for holding transmission of the third message in the terminal device 100, and the transmission frequency of the third message.

In one or more embodiments, the base station device 200 may select one of the plurality of holding periods (e.g., s0, s0dot5, s1, s2, s5, s10, s20, s30, s60, s90, s120, s300, and s600) included in [Table 6] to configure the transmission control information. For example, when the holding period is '1 sec', the base station device 200 may enter/declare 's1' in the AIMLPreferenceIndicationProhibitTimer (e.g., transmission control information) in [Table 6] and transmit the AIMLPreferenceIndicationProhibitTimer with written/declared 's1' to the terminal device 100. The terminal device 100 may be required to hold a next third message for a holding period (e.g., 1 sec) from the time of first transmitting the third message including preference information of the terminal device 100 (the initial transmission time of the third message by the terminal device 100 may be scheduled by the base station device 200). After the holding period (e.g., 1 sec) has elapsed, the terminal device 100 may transmit the next third message to the base station device 200. In another example, when the holding period is '0.5 sec', the base station device 200 may enter/declare 's0dot5' in the AIMLPreferenceIndicationProhibitTimer (e.g. transmission control information) in [Table 6] and transmit it to the terminal device 100. The terminal device 100 may be required to hold a next third message for a holding period (e.g., 0.5 sec) from the time point of first transmitting the third message including preference information of the terminal device 100 (the initial transmission time point of the third message by the terminal device 100 may be scheduled by the base station device 200). After the holding period (e.g., 0.5 sec) has elapsed, the terminal device 100 may transmit the next third message to the base station device 200.

**[Table 6]**

| |
|---|
| AIMLAssistanceConfig ::= SEQUENCE { |
| AIMLPreferenceIndicationProhibitTimer ENUMERATED {s0, s0dot5, s1, s2, s5, s10, s20, s30, s60, s90, s120, s300, s600, spare3, spare2, spare1} |
| } |

In the above, the base station device 200 is described as transmitting transmission control information (e.g., AIMLPreferenceIndicationProhibitTimer) configured by selecting one of the holding periods s0, s0dot5, s1, s2, s5, s10, s20, s30, s60, s90, s120, s300, and s600 in [Table 6] to the terminal device 100, but is not limited thereto. The base station device 200 according to one or more embodiments may configure transmission control information including various holding periods depending on the communication environment and scenario and control transmission of the third message (e.g., preference information of the terminal device 100) of the terminal device 100.

Because the descriptions of operations S310 to S350 of FIG. 7 are substantially the same as the descriptions of operations S210 to S250 of FIG. 6, the descriptions of operations S310 to S350 of FIG. 7 are replaced with the descriptions of operations S210 to S250 of FIG. 6.

As described above, in one or more embodiments according to the disclosure, transmission of preference information (e.g., the third message of FIG. 6) of the terminal device 100 may be held for a holding period determined in advance by the base station device 200 based on transmission control information.

Therefore, one or more embodiments according to the disclosure may provide an apparatus and method capable of efficiently managing an AI/ML model or AI/ML functionality by controlling the transmission timing of preference information of the terminal device 100 through a control message including transmission control information and preventing signaling overhead caused by excessive transmission of preference information of the terminal devices 100.

The operation of the terminal device 100 shown in FIG. 7 may also be performed by the base station device 200 or via interactions with the base station device 200, and the operation of the base station device 200 may also be performed by the terminal device 100 or via interactions with the terminal device 100. That is, the terminal device 100 of FIG. 7 may be a first device that is either a terminal device or base station, and the base station device 200 of FIG. 7 may be a second device that is either a terminal device or a base station.

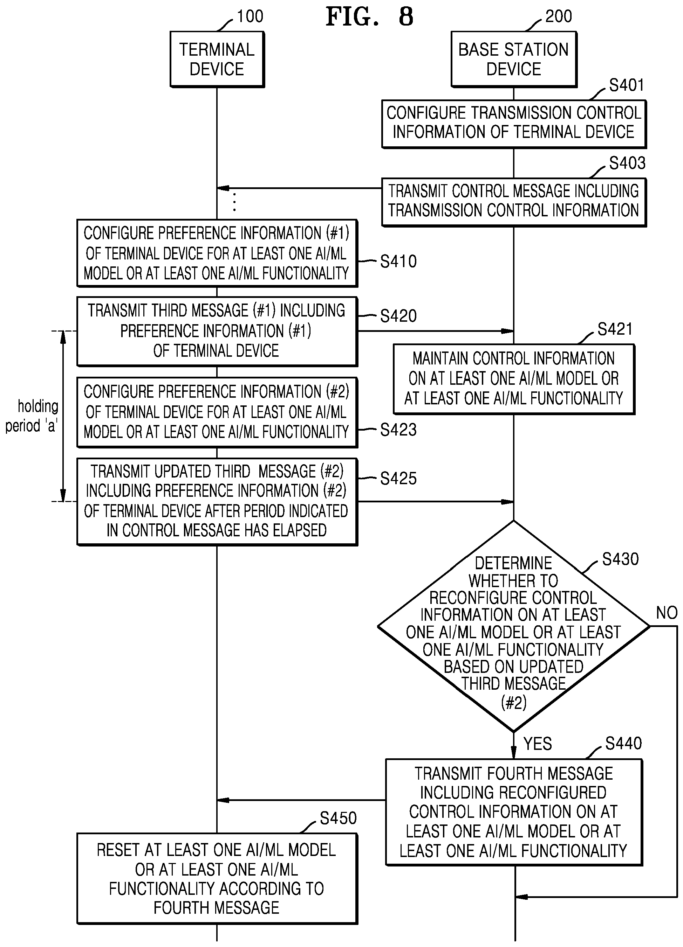

FIG. 8 is a flow diagram illustrating a method of managing an AI/ML model or AI/ML functionality in a wireless communication system according to one or more embodiments.

In detail, FIG. 8 is a diagram illustrating a method of managing an AI/ML model or AI/ML functionality based on signaling (e.g., signaling of transmission control information) between the terminal device 100 and the base station device 200.

Referring to FIG. 8, a method of managing an AI/ML model or AI/ML functionality based on signaling between the terminal device 100 and the base station device 200 in a wireless communication system may include operations S401 to S450. In the descriptions of operations S401 to S450 of FIG. 8, descriptions that are substantially the same as those of FIGS. 5 to 7 are replaced with the descriptions of FIGS. 5 to 7.

In the disclosure, the AI/ML model may refer to a hardware configuration and/or software configuration for learning (or training) a certain pattern of a data set and/or inferring/predicting the target function of AI/ML-based communication technology based on the learned pattern. The AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

The terminal device 100 may notify the base station device 200 of the preference information reporting capability (i.e., the terminal device 100 can transmit/report an opinion on at least one AI/ML model or at least one AI/ML functionality to the base station device 200) of the terminal device 100 in advance during the process (e.g., an initial setup process) of establishing a wireless communication connection with the base station device 200.

In operation S401, the base station device 200 may configure transmission control information of the terminal device 100, and in operation S403, the base station device 200 may transmit a control message including the transmission control information. For example, the transmission control information may include information on the transmission time of the third message, a period for holding transmission of the third message in the terminal device 100, and the transmission frequency of the third message. For example, the base station device 200 may transmit, to the terminal device 100, a control message obtained by entering/declaring 'Sa (i.e., the holding period is 'a sec')' in the transmission control information (see FIG. 7 and [Table 6]). Thereafter, the terminal device 100 may set at least one AI/ML model or at least one AI/ML functionality based on signaling with the base station device 200.

In operation S410, the terminal device 100 may configure preference information (preference information #1) of the terminal device 100 for at least one AI/ML model or at least one AI/ML functionality, and in operation S420, the terminal device 100 may transmit a third message (message #1) including the preference information (preference information #1) of the terminal device 100. For example, the terminal device 100 may configure preference information (preference information# 1) of the terminal device 100 based on a monitoring result of previously set at least one AI/ML model or a monitoring result of at least one AI/ML functionality. The preference information (preference information#1) of the terminal device 100 may include information (e.g., information requesting reset to an AI/ML model or AI/ML functionality preferred by the terminal device 100) on an AI/ML model or AI/ML functionality preferred by the terminal device 100 from among at least one AI/ML model or at least one AI/ML functionality (see FIG. 6 and [Table 5]).

In operation S421, the base station device 200 may determine to maintain control information on at least one AI/ML model or at least one AI/ML functionality, despite receiving the third message (message #1) including the preference information (preference information #1) of the terminal device 100.

In operation S423, the terminal device 100 may configure preference information (preference information #2) of the terminal device 100 for at least one AI/ML model or at least one AI/ML functionality. For example, the terminal device 100 may configure preference information (preference information #2) of the terminal device 100 based on a monitoring result of previously set at least one AI/ML model or a monitoring result of at least one AI/ML functionality. The preference information (preference information #2) of the terminal device 100 may include information (e.g., information requesting reset to an AI/ML model or AI/ML functionality preferred by the terminal device 100) on an AI/ML model or AI/ML functionality preferred by the terminal device 100 from among at least one AI/ML model or at least one AI/ML functionality (see FIG. 6 and [Table 5]). The preference information (preference information #2) of the terminal device 100 may include the same information as the preference information (preference information #1) of the terminal device 100 or may include information that is different from the preference information (preference information #1) of the terminal device 100.

In operation S425, the terminal device 100 may transmit an updated third message (message #2) including the preference information (preference information #2) of the terminal device 100 after a period (e.g., a holding period of the preference information (#2)) indicated in the control message has elapsed. For example, the terminal device 100, according to the transmission control information, may hold the preference information (preference information #2) until the holding period 'a sec' has elapsed from the time point of transmitting the preference information (preference information #1) (operation S420), and may transmit the preference information (preference information #2) to the base station device 200 after the holding period 'a sec' has elapsed from the time point of transmitting the preference information (preference information #1) (operation S420).

In operation S430, the base station device 200 may determine whether to reconfigure control information on at least one AI/ML model or at least one AI/ML functionality based on the updated third message (message #2) including the preference information (preference information #2) of the terminal device 100. The base station device 200 may perform operation S440 when reconfiguring control information on at least one AI/ML model or at least one AI/ML functionality based on the updated third message (message #2), and may terminate the operation when not reconfiguring control information on at least one AI/ML model or at least one AI/ML functionality based on the updated third message (message #2), that is, may maintain control information on at least one existing AI/ML model or at least one existing AI/ML functionality.

In operation S440, the base station device 200 may transmit a fourth message including reconfigured control information on at least one AI/ML model or at least one AI/ML functionality.

In operation S450, the terminal device 100 may reset at least one AI/ML model or at least one AI/ML functionality according to the fourth message. For example, the terminal device 100 may perform selection, activation, deactivation, switching, or fallback operation on at least one AI/ML model or at least one AI/ML functionality according to the fourth message.

Therefore, one or more embodiments according to the disclosure may provide an apparatus and method capable of performing adaptive management of an AI/ML model or AI/ML functionality through signaling including preference information (i.e., information requesting reset to the AI/ML model or AI/ML functionality preferred by the terminal device 100) of the terminal device 100 configured based on a monitoring result of the operational performance of previously set at least one AI/ML model or at least one AI/ML functionality between the terminal device 100 and the base station device 200.

Furthermore, one or more embodiments according to the disclosure may provide an apparatus and method capable of efficiently managing an AI/ML model or AI/ML functionality by controlling the transmission timing of preference information of the terminal device 100 through a control message including transmission control information and preventing signaling overhead caused by excessive transmission of preference information of the terminal devices 100.

The operation of the terminal device 100 as shown in FIG. 8 may also be performed by the base station device 200 or via interactions with the base station device 200, and the operation of the base station device 200 may also be performed by the terminal device 100 or via interactions with the terminal device 100. That is, the terminal device 100 of FIG. 8 may be a first device that is either a terminal device or base station, and the base station device 200 of FIG. 8 may be a second device that is either a terminal device or a base station.

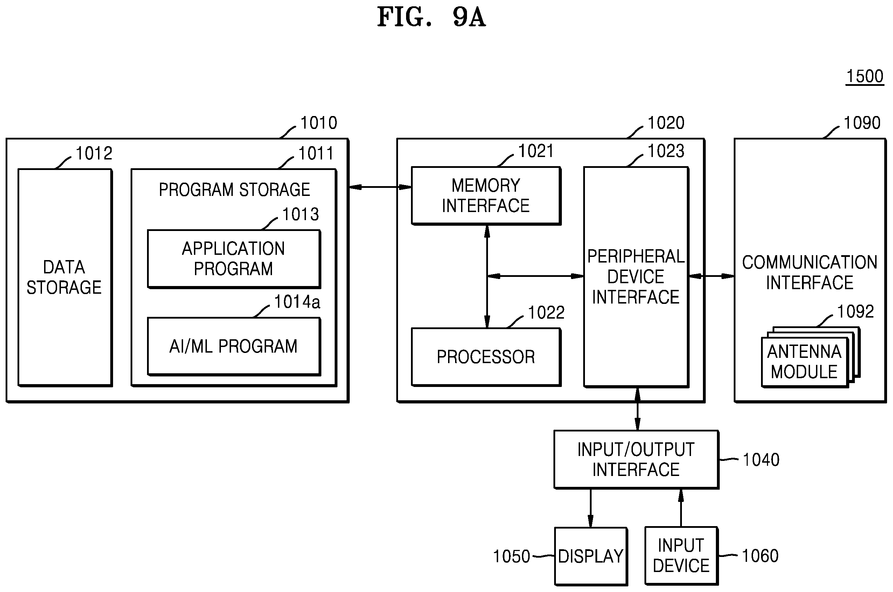

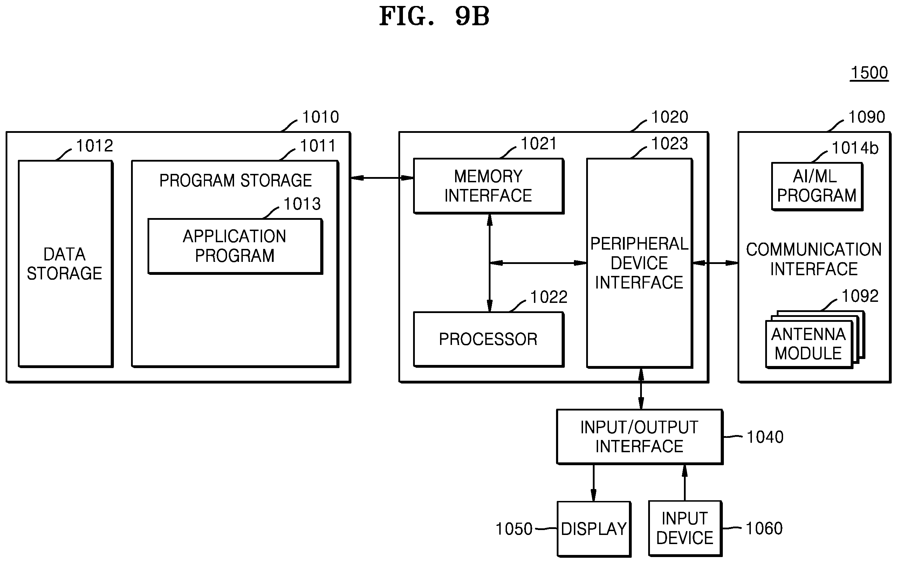

FIGS. 9A and 9B are block diagrams illustrating an electronic device 1500 according to one or more embodiments. The electronic device 1500 of FIG. 9A may correspond to the terminal device 100 of FIGS. 1 to 8.

Referring to FIGS. 9A and 9B, the electronic device 1500 may include a memory 1010, a processor unit 1020, an input/output interface (e.g., an input/output interface) 1040, a display (e.g., a display device or a display panel) 1050, an input device 1060, and a communication interface 1090. Here, a plurality of memories 1010 may be provided. Each element will be described below.

Referring to FIG. 9A, the memory 1010 may include a program storage 1011 that stores a program for controlling an operation of the electronic device 1500, and a data storage 1012 that stores data generated during execution of the program. The data storage 1012 may store data required for operations of an application program 1013 and a computing resource setting program 1014. The program storage 1011 may include an application program 1013 and an AI/ML program 1014a. Here, a program included in the program storage 1011 may be a set of instructions and may be expressed as an instruction set.

The application program 1013 includes an application program operating in the electronic device 1500. That is, the application program 1013 may include instructions of an application driven by a processor 1022.

FIG. 9A illustrates the case where the AI/ML program 1014a is included in the memory 1010 (or the program storage 1011). However, the disclosure is not limited thereto, and the AI/ML program 1014b according to one or more embodiments may be included in various configurations of the electronic device 1500 depending on design. Referring to FIG. 9B, the AI/ML program 1014b according to one or more embodiments may be included in the communication interface 1090 (e.g. within memory within the communication interface 1090).

According to embodiments, in FIGS. 9A and 9B, the AI/ML programs 1014a and 1014b may include at least one AI/ML model or at least one AI/ML functionality supportable by the electronic device 1500 for AI/ML-based communication technology. The at least one AI/ML model may refer to a hardware configuration and/or software configuration for learning (or training) a certain pattern of a data set and/or inferring/predicting the target function of AI/ML-based communication technology based on the learned pattem. The at least one AI/ML functionality may refer to a hardware configuration and/or software configuration (or a set of configurations) for performing a pre-agreed target feature (or pre-agreed target function) or pre-agreed target feature group (or pre-agreed target function group) between the terminal device 100 and the base station device 200 in AI/ML-based communication.

According to embodiments, in FIGS. 9A and 9B, the AI/ML programs 1014a and 1014b may configure/generate capability information on AI/ML of the electronic device 1500. The AI/ML programs 1014a and 1014b may control the communication interface 1090 to transmit the capability information on AI/ML of the electronic device 1500 to an external electronic device (e.g., the base station device 200). The capability information on AI/ML of the electronic device 1500 may include information on the maximum number of at least one AI/ML model supportable by the electronic device 1500 or the maximum number of at least one AI/ML functionality supportable by the electronic device 1500.

According to embodiments, in FIGS. 9A and 9B, the AI/ML programs 1014a and 1014b may configure/generate preference information on AI/ML of the electronic device 1500. The AI/ML programs 1014a and 1014b may control the communication interface 1090 to transmit the preference information on AI/ML of the electronic device 1500 to an external electronic device (e.g., the base station device 200). Here, the preference information on AI/ML of the electronic device 1500 may include information (e.g., information requesting reset to an AI/ML model or AI/ML functionality preferred by the electronic device 1500) on an AI/ML model or AI/ML functionality preferred by the electronic device 1500 from among at least one AI/ML model or at least one AI/ML functionality.

According to embodiments, in FIGS. 9A and 9B, the AI/ML programs 1014a and 1014b may control the communication interface 1090 to receive transmission control information from an external electronic device (e.g., the base station device 200 of FIG. 1). The AI/ML programs 1014a and 1014b may determine the timing of transmission of the preference information on AI/ML according to the received transmission control information. The transmission control information may include information (e.g. transmission time for transmission of the preference information on AI/ML, transmission holding period for the preference information on AI/ML, and transmission frequency for transmission of the preference information on AI/ML) for controlling the transmission time point of the preference information on AI/ML of the electronic device 1500.

A peripheral device interface 1023 may control connection between an input/output peripheral device of the base station 300, the processor 1022, and a memory interface 1021.

The input/output interface 1040 may provide an interface between an input/output device, such as the display 1050 and the input device 1060, and the peripheral device interface 1023. The display 1050 displays status information, input characters, moving pictures, still pictures, and the like. For example, the display 1050 may display information on an application program driven by the processor 1022.

The input device 1060 may provide input data generated by selection of the electronic device 1500 to the processor unit 1020 through the input/output interface 1040. Here, the input device 1060 may include a keypad including at least one hardware button and a touch pad for sensing touch information. For example, the input device 1060 may provide touch information, such as a touch, a touch movement, and a touch release, sensed through a touch pad, to the processor 1022 through the input/output interface 1040. The electronic device 1500 may include the communication interface 1090 that performs communication functions for voice communication and data communication. The communication interface 1090 may include a modem including an antenna module 1092 that performs various functions (e.g. a cell search function, a cell measurement function, a handover function, etc.) for connecting to a wireless network to perform various wireless communications, according to embodiments.

In FIGS. 9A and 9B, the operation of the electronic device 1500 may also be performed by an external electronic device or via interactions with the external electronic device, and the operation of the external electronic device may also be performed by the electronic device 1500 or via interactions with the electronic device 1500.

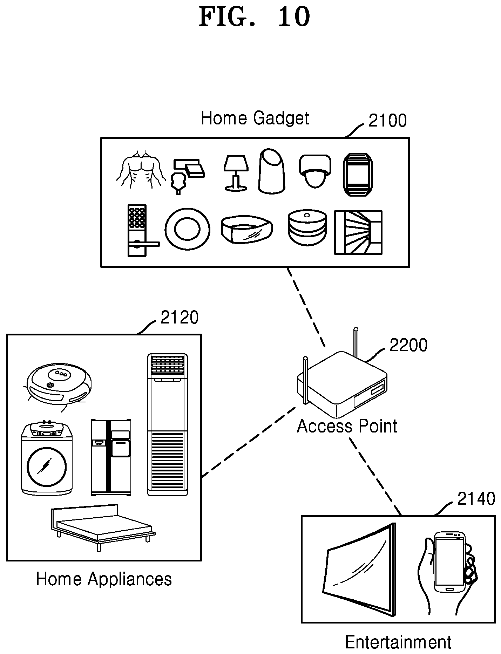

FIG. 10 is a diagram illustrating electronic devices to which AI/ML-based communication technology is applied, according to one or more embodiments.

In FIG. 10, it is assumed that a home gadget 2100, a home appliance 2120, and an entertainment device 2140 are electronic devices capable of a wireless communication connection based on AI/ML-based communication technology, and it is assumed that an access point 2200 is capable of performing a wireless communication connection based on AI/ML-based communication technology with at least one of an electronic device (e.g., the terminal device 100), the home gadget 2100, the home appliance 2120, and the entertainment device 2140.

Referring to FIG. 10, each of the electronic device (e.g., the terminal device 100), the home gadget 2100, the home appliance 2120, and the entertainment device 2140 may transmit, to access point 2200, capability information including the maximum number of at least one AI/ML model or the maximum number of at least one AI/ML functionality, which is supportable by each device.

Each of the electronic device (e.g., the terminal device 100), the home gadget 2100, the home appliance 2120, and the entertainment device 2140 may transmit, to access point 2200, preference information on at least one AI/ML model or at least one AI/ML functionality.

Each of the electronic device (e.g., the terminal device 100), the home gadget 2100, the home appliance 2120, and the entertainment device 2140 may transmit, to the access point 2200, the preference information based on transmission control information configured by the access point 2200.

The access point 2200 may perform efficient management on at least one AI/ML model or at least one AI/ML functionality stored in each device, based on signaling (e.g., the capability information, the preference information, and/or the transmission control information) between the electronic device (e.g., the terminal device 100), the home gadget 2100, the home appliance 2120, and the entertainment device 2140.

In some embodiments, the home gadget 2100, the home appliance 2120, the entertainment device 2140, and the access points 2200 may constitute an Internet of Things (IoT) network system. It will be understood that the electronic devices 1600 illustrated in FIG. 10 are only examples, and the above embodiments may be applied to other electronic devices not illustrated in FIG. 10.

In FIG. 10, the operation of the electronic device (e.g., the terminal device 100) may also be performed by the operation of the access point 2200, and the operation of the access point 2200 may be performed by the electronic device (e.g., the terminal device 100).

## Claims

1. A terminal device comprising:
a memory (120) configured to store at least one artificial intelligence, AI, model or at least one AI functionality for performing wireless communication based on AI;
a communication interface (130); and
a processor (110) configured to:
configure capability information of the terminal device, the capability information comprising information on a number of at least one AI model or a number of at least one AI functionality, which is supportable by the terminal device; and
control the communication interface (130) to transmit a first message comprising the capability information of the terminal device to a base station device,
wherein the capability information comprises information on a maximum number of at least one AI model supportable by the terminal device, or at least one of information on a maximum number of one-sided AI models supportable by the terminal device from among the at least one AI model and information on a maximum number of two-sided AI models supportable by the terminal device from among the at least one AI model.

2. The terminal device of claim 1, wherein the capability information comprises information on a maximum number of at least one AI functionality supportable by the terminal device, or at least one of information on a maximum number of one-sided AI functionalities supportable by the terminal device from among the at least one AI functionality and information on a maximum number of two-sided AI functionalities supportable by the terminal device from among the at least one AI functionality.

3. The terminal device of any preceding claim, wherein the processor (110) is further configured to set the at least one AI model or the at least one AI functionality based on a second message received from the base station device in response to the first message.

4. The terminal device of any preceding claim, wherein the processor (110) is further configured to:
monitor operational performance of the at least one AI model or operational performance of the at least one AI functionality,
configure preference information on the at least one AI model or the at least one AI functionality based on results of the monitoring, and
control the communication interface to transmit a third message comprising the preference information to the base station device.

5. The terminal device of claim 4, wherein the processor (110) is further configured to receive a control message comprising transmission control information from the base station device through the communication interface.

6. The terminal device of claim 5, wherein, to transmit the third message, the processor (110) is further configured to:
determine transmission timing of the third message based on the transmission control information, and
control the communication interface (130) to transmit the third message to the base station device at the determined transmission timing,
wherein the transmission control information comprises information on a transmission time of the third message, a period of holding transmission of the third message in the terminal device, and a transmission frequency of the third message.

7. The terminal device of any of claims 4-6, wherein the preference information comprises information requesting, by the terminal device, selection, switching, activation, deactivation, or fallback of the at least one AI model or the at least one AI functionality.

8. A base station device comprising:
a memory (230);
a communication interface (220); and
a processor (210) configured to:
control the communication interface (230) to receive a first message comprising capability information of a terminal device from the terminal device,
configure control information on at least one artificial intelligence, AI, model or at least one AI functionality based on the capability information of the terminal device in the first message, and
transmit a second message comprising the control information to the terminal device,
wherein the capability information of the terminal device comprises information on a number of at least one AI model or a number of at least one AI functionality, which is supportable by the terminal device,
wherein the capability information comprises information on a maximum number of at least one AI model supportable by the terminal device, or at least one of information on a maximum number of one-sided AI models supportable by the terminal device from among the at least one AI model and information on a maximum number of two-sided AI models supportable by the terminal device from among the at least one AI model.

9. The base station device of claim 8, wherein the capability information comprises information on a maximum number of at least one AI functionality supportable by the terminal device, or at least one of information on a maximum number of one-sided AI functionalities supportable by the terminal device from among the at least one AI functionality and information on a maximum number of two-sided AI functionalities supportable by the terminal device from among the at least one AI functionality.

10. The base station device of claim 8 or claim 9, wherein the processor (230) is further configured to:
configure transmission control information, and
transmit a control message comprising the transmission control information to the terminal device through the communication interface.

11. The base station device of claim 10, wherein the transmission control information comprises information indicating a transmission time of a third message, a period of holding transmission of the third message in the terminal device, and a transmission frequency of the third message, which are predetermined by the base station device.

12. A communication method performed by a terminal device, the communication method comprising:
transmitting capability information from the terminal device to a base station device, the capability information indicating that the terminal device is capable of reporting an artificial intelligence, AI, functionality preference of the terminal device to the base station device;
based on a communication session being set up between the terminal device and the base station device for reporting the AI functionality preference to the base station device, receiving a prohibit timer from the base station device, the prohibit timer prohibiting the terminal device from transmitting an updated AI functionality preference in a predetermined time period; and
after the prohibit timer expires, transmitting the updated AI functionality preference from the terminal device to the base station device,
wherein the capability information comprises information on a maximum number of at least one AI model supportable by the terminal device, or at least one of information on a maximum number of one-sided AI models supportable by the terminal device from among the at least one AI model and information on a maximum number of two-sided AI models supportable by the terminal device from among the at least one AI model.

13. The communication method of claim 12, wherein the capability information comprises information about a number of identifications assigned to AI functionalities or AI models supported by the terminal device, as a number of AI functionalities or AI models supported by the terminal device.

## Patentansprüche

1. Endgerätvorrichtung, umfassend:
einen Speicher (120), der zum Speichern mindestens eines Modells der künstlichen Intelligenz, KI, oder mindestens einer KI-Funktionalität zur Durchführung drahtloser Kommunikation auf der Grundlage von KI konfiguriert ist;
eine Kommunikationsschnittstelle (130); und
einen Prozessor (110), der konfiguriert ist zum:
Konfigurieren von Fähigkeitsinformationen der Endgerätvorrichtung, wobei die Fähigkeitsinformationen Informationen über eine Anzahl von mindestens einem KI-Modell oder eine Anzahl von mindestens einer Kl-Funktionalität umfassen, die von der Endgerätvorrichtung unterstützt werden kann; und
Steuern der Kommunikationsschnittstelle (130), um eine erste Nachricht, die die Fähigkeitsinformationen der Endgerätvorrichtung umfasst, an eine Basisstationsvorrichtung zu übertragen,
wobei die Fähigkeitsinformationen Informationen über eine maximale Anzahl von mindestens einem KI-Modell, das von der Endgerätvorrichtung unterstützt werden kann, oder mindestens eine von Informationen über eine maximale Anzahl von einseitigen KI-Modellen, die von der Endgerätvorrichtung aus dem mindestens einen KI-Modell unterstützt werden können, und Informationen über eine maximale Anzahl von zweiseitigen KI-Modellen, die von der Endgerätvorrichtung aus dem mindestens einen KI-Modell unterstützt werden können, umfassen.

2. Endgerätvorrichtung nach Anspruch 1, wobei die Fähigkeitsinformationen Informationen über eine maximale Anzahl von mindestens einer Kl-Funktionalität, die von der Endgerätvorrichtung unterstützt werden kann, oder mindestens eine von Informationen über eine maximale Anzahl von einseitigen KI-Funktionalitäten, die von der Endgerätvorrichtung aus der mindestens einen Kl-Funktionalität unterstützt werden können, und Informationen über eine maximale Anzahl von zweiseitigen KI-Funktionalitäten, die von der Endgerätvorrichtung aus der mindestens einen Kl-Funktionalität unterstützt werden können, umfassen.

3. Endgerätvorrichtung nach einem vorstehenden Anspruch, wobei der Prozessor (110) weiter zum Festlegen des mindestens einen KI-Modells oder der mindestens einen KI-Funktionalität auf der Grundlage einer zweiten Nachricht, die von der Basisstationsvorrichtung als Reaktion auf die erste Nachricht empfangen wird, konfiguriert ist.

4. Endgerätvorrichtung nach einem vorstehenden Anspruch, wobei der Prozessor (110) weiter konfiguriert ist zum:
Überwachen der Betriebsleistung des mindestens einen KI-Modells oder der Betriebsleistung der mindestens einen KI-Funktionalität,
Konfigurieren von Präferenzinformationen über das mindestens eine KI-Modell oder die mindestens eine Kl-Funktionalität auf der Grundlage von Ergebnissen der Überwachung, und
Steuern der Kommunikationsschnittstelle, um eine dritte Nachricht zu übertragen, die die Präferenzinformationen an die Basisstationsvorrichtung umfasst.

5. Endgerätvorrichtung nach Anspruch 4, wobei der Prozessor (110) weiter zum Empfangen einer Steuernachricht konfiguriert ist, die Übertragungssteuerinformationen von der Basisstationsvorrichtung über die Kommunikationsschnittstelle umfasst.

6. Endgerätvorrichtung nach Anspruch 5, wobei, um die dritte Nachricht zu übertragen, der Prozessor (110) weiter konfiguriert ist zum:
Bestimmen des Sendezeitpunkts der dritten Nachricht auf der Grundlage der Übertragungssteuerinformationen, und
Steuern der Kommunikationsschnittstelle (130), um die dritte Nachricht zum bestimmten Sendezeitpunkt an die Basisstationsvorrichtung zu übertragen,
wobei die Übertragungssteuerinformationen Informationen über eine Übertragungszeit der dritten Nachricht, eine Zeitspanne des Haltens der Übertragung der dritten Nachricht in der Endgerätvorrichtung und eine Übertragungsfrequenz der dritten Nachricht umfassen.

7. Endgerätvorrichtung nach einem der Ansprüche 4-6, wobei die Präferenzinformationen Informationen umfassen, die von der Endgerätvorrichtung die Auswahl, das Umschalten, die Aktivierung, die Deaktivierung oder den Rückgriff auf das mindestens eine KI-Modell oder die mindestens eine Kl-Funktionalität anfordern.

8. Basisstationsvorrichtung, umfassend:
einen Speicher (230);
eine Kommunikationsschnittstelle (220); und
einen Prozessor (210), der konfiguriert ist zum:
Steuern der Kommunikationsschnittstelle (230) um eine ersten Nachricht, die Fähigkeitsinformationen einer Endgerätvorrichtung umfasst, von der Endgerätvorrichtung zu empfangen,
Konfigurieren von Steuerinformationen über mindestens ein Modell der künstlichen Intelligenz, KI, oder mindestens eine Kl-Funktionalität auf der Grundlage der Fähigkeitsinformationen der Endgerätvorrichtung in der ersten Nachricht, und
Übertragen einer zweiten Nachricht, die die Steuerinformationen umfasst, an die Endgerätvorrichtung,
wobei die Fähigkeitsinformationen der Endgerätvorrichtung Informationen über eine Anzahl von mindestens einem KI-Modell oder eine Anzahl von mindestens einer KI-Funktionalität umfassen, die von der Endgerätvorrichtung unterstützt werden können,
wobei die Fähigkeitsinformationen Informationen über eine maximale Anzahl von mindestens einem KI-Modell, das von der Endgerätvorrichtung unterstützt werden kann, oder mindestens eine von Informationen über eine maximale Anzahl von einseitigen KI-Modellen, die von der Endgerätvorrichtung aus dem mindestens einen KI-Modell unterstützt werden können, und Informationen über eine maximale Anzahl von zweiseitigen KI-Modellen, die von der Endgerätvorrichtung aus dem mindestens einen KI-Modell unterstützt werden können, umfassen.

9. Basisstationsvorrichtung nach Anspruch 8, wobei die Fähigkeitsinformationen Informationen über eine maximale Anzahl von mindestens einer Kl-Funktionalität, die von der Endgerätvorrichtung unterstützt werden kann, oder mindestens eine von Informationen über eine maximale Anzahl von einseitigen KI-Funktionalitäten, die von der Endgerätvorrichtung aus der mindestens einen Kl-Funktionalität unterstützt werden können, und Informationen über eine maximale Anzahl von zweiseitigen KI-Funktionalitäten, die von der Endgerätvorrichtung aus der mindestens einen Kl-Funktionalität unterstützt werden können, umfassen.

10. Basisstationsvorrichtung nach Anspruch 8 oder Anspruch 9, wobei der Prozessor (230) weiter konfiguriert ist zum:
Konfigurieren von Übertragungssteuerinformationen, und
Übertragen einer Steuernachricht, die die Übertragungssteuerinformationen umfasst, über die Kommunikationsschnittstelle an die Endgerätvorrichtung.

11. Basisstationsvorrichtung nach Anspruch 10, wobei die Übertragungssteuerinformationen Informationen umfassen, die einen Übertragungszeitpunkt einer dritten Nachricht, eine Zeitspanne des Haltens der Übertragung der dritten Nachricht in der Endgerätvorrichtung und eine Übertragungsfrequenz der dritten Nachricht anzeigen, die von der Basisstationsvorrichtung vorbestimmt sind.

12. Kommunikationsverfahren, das von einer Endgerätvorrichtung durchgeführt wird, wobei das Kommunikationsverfahren umfasst:
Übertragen von Fähigkeitsinformationen von der Endgerätvorrichtung an eine Basisstationsvorrichtung, wobei die Fähigkeitsinformationen anzeigen, dass die Endgerätvorrichtung in der Lage ist, eine Funktionalitätspräferenz der Endgerätvorrichtung für künstliche Intelligenz, KI, an die Basisstationsvorrichtung zu melden;
auf der Grundlage auf einer Kommunikationssitzung, die zwischen der Endgerätvorrichtung und der Basisstationsvorrichtung zum Melden der KI-Funktionalitätspräferenz an die Basisstationsvorrichtung eingerichtet wird, Empfangen eines Verbotszeitgebers von der Basisstationsvorrichtung, wobei der Verbotszeitgeber die Endgerätvorrichtung daran hindert, eine aktualisierte Kl-Funktionalitätspräferenz in einer vorbestimmten Zeitperiode zu übertragen; und
nach Ablauf des Verbotszeitgebers, Übertragen der aktualisierten KI-Funktionalitätspräferenz von der Endgerätvorrichtung an die Basisstationsvorrichtung,
wobei die Fähigkeitsinformationen Informationen über eine maximale Anzahl von mindestens einem KI-Modell, das von der Endgerätvorrichtung unterstützt werden kann, oder mindestens eine von Informationen über eine maximale Anzahl von einseitigen KI-Modellen, die von der Endgerätvorrichtung aus dem mindestens einen KI-Modell unterstützt werden können, und Informationen über eine maximale Anzahl von zweiseitigen KI-Modellen, die von der Endgerätvorrichtung aus dem mindestens einen KI-Modell unterstützt werden können, umfassen.

13. Kommunikationsverfahren nach Anspruch 12, wobei die Fähigkeitsinformationen Informationen über eine Anzahl von Identifikationen umfassen, die von der Endgerätvorrichtung unterstützten Kl-Funktionalitäten oder KI-Modellen zugeordnet sind, als eine Anzahl von KI-Funktionalitäten oder KI-Modellen, die von der Endgerätvorrichtung unterstützt werden.

## Revendications

1. Dispositif terminal, comprenant :
une mémoire (120) configurée pour stocker au moins un modèle d'intelligence artificielle, IA, ou au moins une fonctionnalité d'IA pour effectuer une communication sans fil basée sur l'IA ;
une interface de communication (130) ; et
un processeur (110) configuré pour :
configurer des informations de capacité du dispositif terminal, les informations de capacité comprenant des informations sur un nombre d'au moins un modèle d'IA ou un nombre d'au moins une fonctionnalité d'IA pris en charge par le dispositif terminal ;
commander l'interface de communication (130) pour transmettre un premier message comprenant les informations de capacité du dispositif terminal à un dispositif de station de base,
dans lequel les informations de capacité comprennent des informations sur un nombre maximal d'au moins un modèle d'IA pris en charge par le dispositif terminal, ou au moins une information sur un nombre maximal de modèles d'IA unilatéraux pris en charge par le dispositif terminal parmi le au moins un modèle d'IA et des informations sur un nombre maximal de modèles d'IA bilatéraux pris en charge par le dispositif terminal parmi le au moins un modèle d'IA.

2. Dispositif terminal selon la revendication 1, dans lequel les informations de capacité comprennent des informations sur un nombre maximal d'au moins une fonctionnalité d'IA prise en charge par le dispositif terminal, ou au moins une information sur un nombre maximal de fonctionnalités d'IA unilatérales prises en charge par le dispositif terminal parmi la au moins une fonctionnalité d'IA et des informations sur un nombre maximal de fonctionnalités d'IA bilatérales prises en charge par le dispositif terminal parmi la au moins une fonctionnalité d'IA.

3. Dispositif terminal selon une quelconque revendication précédente, dans lequel le processeur (110) est en outre configuré pour définir le au moins un modèle d'IA ou la au moins une fonctionnalité d'IA sur la base d'un deuxième message reçu du dispositif de station de base en réponse au premier message.

4. Dispositif terminal selon une quelconque revendication précédente, dans lequel le processeur (110) est en outre configuré pour :
surveiller les performances opérationnelles du au moins un modèle d'IA ou les performances opérationnelles de la au moins une fonctionnalité d'IA,
configurer les informations de préférence sur le au moins un modèle d'IA ou sur la au moins une fonctionnalité d'IA sur la base des résultats de la surveillance, et
commander l'interface de communication pour transmettre un troisième message comprenant les informations de préférence au dispositif de station de base.

5. Dispositif terminal selon la revendication 4, dans lequel le processeur (110) est en outre configuré pour recevoir un message de commande comprenant des informations de commande de transmission provenant du dispositif de station de base via l'interface de communication.

6. Dispositif terminal selon la revendication 5, dans lequel, pour transmettre le troisième message, le processeur (110) est en outre configuré pour :
déterminer un moment de transmission du troisième message sur la base des informations de commande de transmission, et
commander l'interface de communication (130) pour transmettre le troisième message au dispositif de station de base au moment de transmission déterminé,
dans lequel les informations de commande de transmission comprennent des informations sur un moment de transmission du troisième message, une durée de maintien de transmission du troisième message dans le dispositif terminal et une fréquence de transmission du troisième message.

7. Dispositif terminal selon l'une quelconque des revendications 4-6, dans lequel les informations de préférence comprennent des informations demandant, par le dispositif terminal, une sélection, une commutation, une activation, une désactivation ou une reprise du au moins un modèle d'IA ou de la au moins une fonctionnalité d'IA.

8. Dispositif de station de base comprenant :
une mémoire (230) ;
une interface de communication (220) ; et
un processeur (210) configuré pour :
commander l'interface de communication (230) pour recevoir un premier message comprenant des informations de capacité d'un dispositif terminal à partir d'un dispositif terminal,
configurer des informations de commande d'au moins un modèle d'intelligence artificielle, IA, ou d'au moins une fonctionnalité d'IA sur la base des informations de capacité du dispositif terminal dans le premier message, et
transmettre un deuxième message comprenant les informations de commande au dispositif terminal,
dans lequel les informations de capacité du dispositif terminal comprennent des informations sur un nombre d'au moins un modèle d'IA ou un nombre d'au moins une fonctionnalité d'IA pris en charge par le dispositif terminal ;
dans lequel les informations de capacité comprennent des informations sur un nombre maximal d'au moins un modèle d'IA pris en charge par le dispositif terminal, ou au moins une information sur un nombre maximal de modèles d'IA unilatéraux pris en charge par le dispositif terminal parmi le au moins un modèle d'IA et des informations sur un nombre maximal de modèles d'IA bilatéraux pris en charge par le dispositif terminal parmi le au moins un modèle d'IA.

9. Dispositif de station de base selon la revendication 8, dans lequel les informations de capacité comprennent des informations sur un nombre maximal d'au moins une fonctionnalité d'IA prise en charge par le dispositif terminal, ou au moins une information sur un nombre maximal de fonctionnalités d'IA unilatérales prises en charge par le dispositif terminal parmi la au moins une fonctionnalité d'IA et des informations sur un nombre maximal de fonctionnalités d'IA bilatérales prises en charge par le dispositif terminal parmi la au moins une fonctionnalité d'IA.

10. Dispositif de station de base selon la revendication 8 ou la revendication 9, dans lequel le processeur (230) est en outre configuré pour :
configurer les informations de commande de transmission, et
transmettre un message de commande comprenant les informations de commande de transmission au dispositif terminal via l'interface de communication.

11. Dispositif de station de base selon la revendication 10, dans lequel les informations de commande de transmission comprennent des informations indiquant un moment de transmission d'un troisième message, une durée de maintien de transmission du troisième message dans le dispositif terminal et une fréquence de transmission du troisième message, qui sont prédéterminés par le dispositif de station de base.

12. Procédé de communication réalisé par un dispositif terminal, le procédé de communication comprenant :
la transmission des informations de capacité du dispositif terminal à un dispositif de station de base, les informations de capacité indiquant que le dispositif terminal est capable de signaler une préférence de fonctionnalité d'intelligence artificielle, IA, du dispositif terminal au dispositif de station de base ;
sur la base d'une session de communication établie entre le dispositif terminal et le dispositif de station de base pour signaler la préférence de fonctionnalité d'IA au dispositif de station de base, la réception d'un délai d'interdiction par le dispositif de station de base, le délai d'interdiciton interdisant au dispositif terminal de transmettre une préférence de fonctionnalité d'IA mise à jour dans une période prédéterminée ; et
une fois le délai d'interdiction expiré, la transmission de la préférence de fonctionnalité d'IA mise à jour à partir du dispositif terminal au dispositif de station de base,
dans lequel les informations de capacité comprennent des informations sur un nombre maximal d'au moins un modèle d'IA pris en charge par le dispositif terminal, ou au moins une information sur un nombre maximal de modèles d'IA unilatéraux pris en charge par le dispositif terminal parmi le au moins un modèle d'IA et des informations sur un nombre maximal de modèles d'IA bilatéraux pris en charge par le dispositif terminal parmi le au moins un modèle d'IA.

13. Procédé de communication selon la revendication 12, dans lequel les informations de capacité comprennent des informations sur un certain nombre d'identifications attribuées à des fonctionnalités d'IA ou à des modèles d'IA pris en charge par le dispositif terminal, en tant que nombre de fonctionnalités d'IA ou de modèles d'IA pris en charge par le dispositif terminal.
